(19) **Europäisches Patentamt / European Patent Office / Office européen des brevets**

(11) **EP 4 455 880 A1**

(12) # EUROPEAN PATENT APPLICATION

(43) Date of publication:
**30.10.2024 Bulletin 2024/44**

(21) Application number: **24167978.6**

(22) Date of filing: **01.04.2024**

(51) International Patent Classification (IPC):
**G06F 9/50** (2006.01) **G06N 3/098** (2023.01)

(52) Cooperative Patent Classification (CPC):
**G06F 9/5027; G06N 20/00**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **31.03.2023 CN 202310340865**

(71) Applicants:
• **DOUYIN VISION CO., LTD.**
  **Beijing 100041 (CN)**
• **Lemon Inc.**
  **Grand Cayman, KY1-1205 (KY)**

(72) Inventors:
• **XU, Anran**
  **Beijing, 100028 (CN)**

• **WANG, Shengjie**
  **Los Angeles, 90066 (US)**
• **CHEN, Lei**
  **Los Angeles, 90066 (US)**
• **LI, Shuai**
  **Beijing, 100028 (CN)**
• **SUN, Jiankai**
  **Los Angeles, 90066 (US)**
• **ZHENG, Zhenzhe**
  **Beijing, 100028 (CN)**
• **WU, Fan**
  **Beijing, 100028 (CN)**

(74) Representative: **Dentons UK and Middle East LLP**
**One Fleet Place**
**London EC4M 7WS (GB)**

(54) ## METHOD, APPARATUS, DEVICE, AND MEDIUM FOR ACTION EXECUTION

(57) A method, apparatus, device, and medium for action execution are provided. In a method, a set of actions to be executed at a first device is determined from a plurality of actions based on a first action model at the first device. A data accumulated indicator associated with the set of actions is obtained. In response to that the data accumulated indicator meets a predetermined condition, parameter data associated with the set of actions is transmitted to the second device to cause the second device to update a second action model at the second device using the parameter data. By means of the example implementations of the present disclosure, sufficient consideration is given to rewards and consumption related to executing actions, and each action can be executed under the condition that consumption constraints are met, so as to increase the corresponding reward.

FIG. 8

EP 4 455 880 A1

**Description**

**CROSS REFERENCE TO RELATED APPLICATIONS**

This application claims the benefit of the Chinese Patent Application No. 202310340865. 1, filed March 31, 2022, the contents of which are hereby incorporated herein in its entirety by reference.

**FIELD**

Example implementations of the present disclosure generally relate to executing actions and, in particular, to a method, apparatus, device, and computer-readable storage medium for action execution in a distributed environment.

**BACKGROUND**

With the development of federated learning and mobile computing, architectures have now been proposed for performing federated learning in distributed environments, which enable collaborative exploration and exploitation by a plurality of clients while protecting sensitive data. For example, individual actions may be executed separately at a plurality of clients, and the plurality of clients may communicate with a server, thereby progressively obtaining, in a distributed manner, an action model for determining the actions to be executed. However, federated learning involves a large amount of data communication and computation, which results in various overheads due to data communication and computation that might affect the performance of machine learning. At this point, how to manage the action execution and thus complete the federated learning process in a more effective way has become a research hotspot and a difficult issue.

**SUMMARY**

In a first aspect of the present disclosure, a method for action execution is provided. In the method, a set of actions to be executed at a first device is determined from a plurality of actions based on a first action model at the first device. A data accumulated indicator associated with the set of actions is obtained, the data accumulated indicator indicating an amount of data to be sent from the first device to a second device associated with the first device. In response to that the data accumulated indicator meets a predetermined condition, parameter data associated with the set of actions is transmitted to the second device to cause the second device to update a second action model at the second device using the parameter data, the parameter data comprising reward data and consumption data associated with the set of actions respectively.

In a second aspect of the present disclosure, an apparatus for action execution is provided. The apparatus comprises: a determining module configured for determining a set of actions to be executed at a first device from a plurality of actions based on a first action model at the first device; an obtaining module configured for obtaining a data accumulated indicator associated with the set of actions, the data accumulated indicator indicating an amount of data to be sent from the first device to a second device associated with the first device; and a sending module configured for, in response to that the data accumulated indicator meets a predetermined condition, transmitting parameter data associated with the set of actions to the second device to cause the second device to update a second action model at the second device using the parameter data, the parameter data comprising reward data and consumption data associated with the set of actions respectively.

In a third aspect of the present disclosure, an electronic device is provided. The electronic device comprises: at least one processing unit; and at least one memory, coupled to the at least one processing unit and storing instructions to be executed by the at least one processing unit, the instructions, when executed by the at least one processing unit, causing the electronic device to implement the method according to the first aspect of the present disclosure.

In a fourth aspect of the present disclosure, a computer-readable storage medium is provided with a computer program stored thereon, the computer program, when executed by a processor, causing the processor to implement the method according to the first aspect of the present disclosure.

In a fifth aspect of the present disclosure, a method for action execution is provided. In the method, a plurality of parameter data from a plurality of first devices respectively are received at a second device associated with the plurality of first devices, parameter data from a first device among the plurality of first devices of the plurality of parameter data being transmitted from the first device to the second device in response to that a data accumulated indicator associated with the first device meets a predetermined condition, the data accumulated indicator indicating an amount of data to be transmitted from the first device to the second device, the parameter data comprising reward data and consumption data associated with a set of actions executed at the first device respectively. Aggregated parameter data is determined based on the plurality of parameter data. The aggregated parameter data is transmitted to the plurality of first devices respectively, so as to cause the plurality of first devices to update a plurality of first action models located at the plurality of first devices based on the aggregated parameter data respectively.

In a sixth aspect of the present disclosure, an apparatus for action execution is provided. The apparatus comprises: a receiving module configured for receiving a plurality of parameter data from a plurality of first devices respectively at a second device associated with the plurality of first devices, parameter data from a first device among the plurality of first devices of the plurality of parameter data being transmitted from the first device to the second device in response to that a data accumulated indicator associated with the first device meets a predetermined condition, the data accumulated indicator indicating an amount of data to be transmitted from the first device to the second device, the parameter data comprising reward data and consumption data associated with a set of actions executed at the first device respectively; a determining module configured for determining aggregated parameter data based on the plurality of parameter data; and a transmitting module configured for transmitting the aggregated parameter data to the plurality of first devices respectively, so as to cause the plurality of first devices to update a plurality of first action models located at the plurality of first devices based on the aggregated parameter data respectively.

In a seventh aspect of the present disclosure, an electronic device is provided. The electronic device comprises: at least one processing unit; and at least one memory, coupled to the at least one processing unit and storing instructions to be executed by the at least one processing unit, the instructions, when executed by the at least one processing unit, causing the electronic device to implement the method according to the fifth aspect of the present disclosure.

In an eighth aspect of the present disclosure, a computer-readable storage medium is provided with a computer program stored thereon, the computer program, when executed by a processor, causing the processor to implement the method according to the fifth aspect of the present disclosure.

It would be appreciated that the content described in the Summary section is neither intended to identify key or essential features of the implementations of the present disclosure, nor is it intended to limit the scope of the present disclosure. Other features of the present disclosure will be readily envisaged through the following description.

## BRIEF DESCRIPTION OF THE DRAWINGS

The above and other features, advantages and aspects of the implementations of the present disclosure will become more apparent in combination with the accompanying drawings and with reference to the following detailed description. In the drawings, the same or similar reference symbols refer to the same or similar elements, where:

FIG. 1 illustrates a block diagram of a distributed processing environment in which an example implementation of the present disclosure may be applied;

FIG. 2 illustrates a block diagram for action execution according to some implementations of the present disclosure;

FIG. 3 illustrates a trajectory diagram of an interactive process for action execution at a plurality of devices according to some implementations of the present disclosure;

FIG. 4 illustrates a block diagram of an algorithm executed at a first device according to some implementations of the present disclosure;

FIG. 5 shows a block diagram of an algorithm executed at a second device according to some implementations of the present disclosure;

FIG. 6 is a block diagram illustrating a comparison of the performance of an action execution process according to some implementations of the present disclosure with that of an action execution process according to various other technical solutions;

FIG. 7 is a block diagram illustrating a comparison of the performance of an action execution process according to some implementations of the present disclosure and an action execution process according to various other technical solutions;

FIG. 8 illustrates a flowchart of a method for action execution at a client according to some implementations of the present disclosure;

FIG. 9 illustrates a flowchart of a method for action execution at a server according to some implementations of the present disclosure;

FIG. 10 illustrates a block diagram of an apparatus for action execution according to some implementations of the present disclosure;

FIG. 11 illustrates a block diagram of an apparatus for action execution according to some implementations of the present disclosure; and

FIG. 12 illustrates a block diagram of a device capable of implementing a plurality of implementations of the present disclosure.

## DETAILED DESCRIPTION

The implementations of the present disclosure will be described in more detail below with reference to the accompanying drawings. Although some implementations of the present disclosure are shown in the drawings, it would be appreciated that the present disclosure can be implemented in various forms and should not be interpreted as limited to the implementations described herein. On the contrary, these implementations are provided for a more thorough and complete understanding of the present disclosure. It would be appreciated that the drawings and implementations of the present disclosure are only for illustrative purposes and are not intended to limit the scope of protection of the present disclosure.

In the description of the implementations of the present disclosure, the term "comprise" and its variants are to be read as open terms that mean "includes, but is not limited to." The term "based on" is to be read as "based at least in part on." The term "one implementation" or "the implementation" are to be read as "at least one implementation." The term "some implementations" is to be read as "at least some implementations." Other definitions, either explicit or implicit, may be included below. As used herein, the term "model" may refer to an association relationship between various data. For example, the above association relationship may be obtained based on various technical solutions currently known and/or to be developed in the future.

It is to be understood that data involved in the present technical solution (including but not limited to the data itself, the acquisition or use of the data) should comply with requirements of corresponding laws and regulations and relevant rules.

It is to be understood that, before applying the technical solutions disclosed in various implementations of the present disclosure, the user should be informed of the type, scope of use, and use scenario of the personal information involved in the present disclosure in an appropriate manner in accordance with relevant laws and regulations, and user authorization should be obtained.

For example, in response to receiving an active request from the user, prompt information is sent to the user to explicitly inform the user that the requested operation would acquire and use the user's personal information. Therefore, according to the prompt information, the user may decide on his/her own whether to provide the personal information to the software or hardware, such as electronic devices, applications, servers, or storage media that perform operations of the technical solutions of the present disclosure.

As an optional but non-limiting implementation, in response to receiving an active request from the user, the way of sending the prompt information to the user may, for example, include a pop-up window, and the prompt information may be presented in the form of text in the pop-up window. In addition, the pop-up window may also carry a select control for the user to choose to "agree" or "disagree" to provide the personal information to the electronic device.

It is to be understood that the above process of notifying and obtaining the user authorization is only illustrative and does not limit the implementations of the present disclosure. Other methods that satisfy relevant laws and regulations are also applicable to the implementations of the present disclosure.

The term "in response to" as used herein means a state in which a corresponding event occurs or a condition is satisfied. It will be understood that there is not necessarily a strong correlation between the execution timing of subsequent actions executed in response to the event or condition and the time when the event occurs or the condition is established. For example, in some cases, subsequent actions can be executed immediately when an event occurs or a condition is established; in other cases, subsequent actions can be executed after a period of time after an event occurs or a condition is established.

## *EXAMPLE ENVIRONMENT*

Many real-world applications, such as data recommendation systems, Internet data push systems, network parameter configuration, crowdsourcing systems, clinical trial systems, and other systems, involve sequential decision-making, in which a decision-maker executes actions in a decided order to maximize their long-term rewards. This type of problem is often modeled as a multi-armed bandit (MAB), in which the decision-maker needs to balance between exploration and exploitation. As a distributed machine learning approach, federated learning can protect user sensitive data to some extent and thus has gained increasing popularity. MAB involves multiple clients collaborating to update the model, extending MAB to the context of federated learning. At this point, a central server is able to leverage a distributed dataset from a large number of clients to improve the performance of MAB algorithms while still protecting the sensitive data of each client.

However, previous research on the federated gaming machine problem has yet to consider the resource constraints on action execution (i.e., pulling arms of MAB), which is a crucial issue in the real world. Typically, the execution of an action needs to satisfy resource consumption constraints and achieve the objective of maximizing rewards throughout the entire decision-making process. For example, in a data push system, it is expected to provide users with various data pushes from data providers, and users' feedback on the data push (e.g., clicks, etc.) might involve the protection of sensitive data. The federated gaming machine may be used to model the data push process, with the goal of optimizing long-term data push effects based on users' feedback. Each data push is associated with a certain consumption. In this case, when performing data push, the decision-making process needs to consider not only the expected rewards (for example, clicks or conversion results) but also the consumption caused by the data push (for example, various resources consumed).

As another example, in the example of parameter configuration for base stations, modeling may also be performed using a federated gaming machine: the base station corresponds to the client, and each configuration of the base station corresponds to an arm of MAB. Taking into account the user experience of base station services, mobile network operators only allow a limited number of adjustments, which reflects the restriction of resources. Furthermore, similar problems may also be found in crowd-sourcing scenarios. That is, the crowd-sourcing platform needs to assign a plurality of tasks to workers and may provide corresponding compensation to workers, so there are budget constraints. However, existing technical solutions do not consider the consumption restriction that should be followed when pulling a certain arm.

A technical solution as MAB has been proposed. This technical solution describes the problem of executing any of K actions on M clients as follows: the client may correspond to MAB, at which point pulling a certain arm may correspond to executing a certain action among the K actions. In the traditional setting of MAB, an arm may be represented as a scalar to infer the reward from the unknown arm distribution. As classical modeling, the linear reward model has been widely studied in contextual gambling machine scenarios. As MAB represents an online learning model that may achieve the intrinsic exploration-exploitation tradeoff in many sequential decision-making problems, many real-world problems are solved by being modeled as gaming machine problems.

In recent years, gaming machine problems in multi-agent and distributed environments have gained increasing attention, and technical solutions have been proposed for distributed federated gaming machines. Specifically, the channel selection problem in distributed wireless networks may be considered, modeled as MAB with collisions, in which a reward of zero is assigned to clients that select the same arm. Meanwhile, there are also some technical solutions for cooperative estimation in the MAB problem, focusing on the problems of network delay and efficient communication issues. A distributed linear gaming machine algorithm has been proposed that uses an efficient communication model, whereas this algorithm fails to protect sensitive data. Although a variety of combined technical solutions have been proposed, existing technical solutions cannot be directly used due to the following three main challenges.

The first challenge comes from computation cost. In classical federated learning, clients have no enough resources to perform complex computation tasks, which requires to efficiently solve the knapsack problem and reduce computation overheads. In existing technical solutions, a linear programming (LP) problem can be solved in each epoch, incurring high computation costs, especially when there are a large number of clients or arms. Solutions based on oracle (i.e., optimal solutions) have further been proposed. However, the optimal solution in the real world can hardly be estimated, and strong assumptions on hypothesis class or distribution are required. The second challenge comes from communication cost. The knapsack constraint under the federated learning framework significantly increases the complexity of the gaming machine problem. Technical solutions that have been proposed reduce communication cost by setting a specific communication threshold. If the amount of LP calculations is reduced, then unlike traditional federated gaming machines, the client will not be able to independently update the local action model in each epoch during calculation. Existing technical solutions only consider the communication cost without the computation cost, which is not conducive to improving overall performance. The third challenge comes from the protection of sensitive data. In many real-world applications, users' private information needs to be protected. Existing solutions often involve adding noise and perturbations to the raw data. However, this will affect the performance of the model, and there is still a risk of sensitive data leakage in the case of less noise. At this point, how to manage action execution and further complete the federated learning process in a more effective way has become a research hotspot and a difficult issue.

### *BRIEF PROCESS FOR ACTION EXECUTION*

In order to at least partially solve the deficiencies in the prior art, a method for action execution is proposed according to an example implementation of the present disclosure. Specifically, the present disclosure addresses the balance between collaborative exploration and exploitation by studying the knapsack problem. Suppose there are M clients, and any of K actions may be performed at each client. M clients may perform desired actions based on linear rewards and consumption under the coordination of the server, thereby minimizing total regret. According to an example implementation of the present disclosure, the process for action execution is implemented using Federated Linear Bandits with Knapsacks (FedUCBwK).

Confronted with the challenge from computation costs, the present disclosure takes into account the significant delay caused by high computation costs, and thus proposes a technical solution that may reduce the number of LP calculations and solve it without the need for assumptions. In the face of communication cost challenges, the present disclosure proposes a new synchronization threshold that allows for uniform synchronization of communication and computation. If the client only calculates and updates the policy without timely communication, information from other clients will be lost and the calculation will be less effective; if the client only communicates without calculation, the client will not be able to update the policy, resulting in the transmission of useless information. Faced with the challenge from the protection of sensitive data, the technical solution of the present disclosure only transmits model parameters but not raw data, thereby protecting sensitive data.

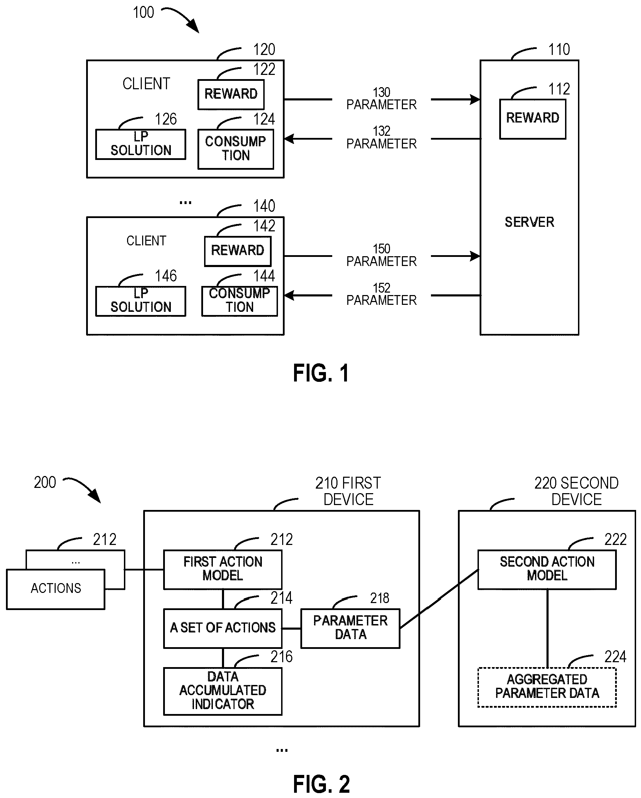

A brief of a distributed processing environment is described with reference to FIG. 1, which illustrates a block diagram of a distributed processing environment 100 in which an example implementation according to the present disclosure may be used. As shown in FIG. 1, the distributed processing environment 100 may comprise a server 110 and a plurality of clients 120, ... , and 140. At this point, it may be considered that each client is a MAB having K arms, and any one of the K arms may be pulled at each client (corresponding to executing a certain action). Each time the arm is pulled, a certain amount of consumption will be incurred, and the goal of pulling the arm is to maximize the reward obtained at the client. A linear programming solving process may be performed at the client to determine actions to be executed.

As shown in FIG. 1, the learning process may be performed at a plurality of clients and the server respectively based on the federated learning architecture. Specifically, at the client 120, various actions to be executed may be determined based on an LP solution 126 to achieve the goal of maximizing a reward 122 under the constraint of a consumption 124. Further, at the client 140, various actions to be executed may be determined based on an LP solution 146 to achieve the goal of maximizing a reward 142 under the constraint of a consumption 144. A Parameter 130 (e.g., parameter related to arm selection, etc.) may be transmitted from the client 120 to the server 110, and a parameter 150 (e.g., parameter related to arm selection, etc.) may be transmitted from the client 140 to the server 110.

The server 110 may aggregate parameters from various clients to update the parameters of the action model at the server. Further, the server 110 may transmit corresponding parameters 132 (e.g., integrated parameters), ..., and 152 to the clients 120, ..., and 140 respectively, thereby updating the action model at each client. In this way, various constraints on rewards and consumption may be considered in federated learning, thereby obtaining an action model that better matches actual needs.

Further, more details of an example implementation according to the present disclosure are shown with reference to FIG. 2, which illustrates a block diagram 200 for action execution according to some implementations of the present disclosure. As shown in FIG. 2, actions may be executed in a distributed environment comprising a first device 210 (e.g., the client shown in FIG. 1) and a second device 220 (e.g., the server shown in FIG. 1). Specifically, the first device 210 may comprise a first action model 212, and the second device 220 may comprise a second action model 222. The first action model 212 and the second action model 222 may be updated respectively based on federated learning.

During the federated learning process, a set of actions 214 to be executed at the first device 210 may be determined from a plurality of actions based on the first action model 212 at the first device 210. A data accumulation indicator 216 associated with the set of actions 214 may be obtained based on the set of actions 214. The data accumulation indicator 216 may here indicate the amount of data to be sent from the first device 210 to the second device 220 associated with the first device 210. If the data accumulation indicator 216 satisfies a predetermined condition, parameter data 218 associated with the set of actions 214 may be sent from the first device 210 to the second device 220 (e.g., the reward and consumption related to the set of actions determined at the first device 210), so that the second device updates the second action model 222 at the second device 220 using the parameter data.

In other words, the data accumulation indicator 216 may indicate whether a communication round is initiated between the first device 210 and the second device 220 . In this way, the communication overheads between the two devices may be reduced, thereby improving the efficiency of executing actions. It will be appreciated that although FIG. 2 only schematically shows a single first device 210, there may further exist other first devices in a distributed environment. At this point, the second device 220 may receive parameter data from other first devices, generate aggregated parameter data 224, and transmit the aggregated parameter data 224 to each first device to update the local action model respectively.

According to an example implementation of the present disclosure, the data accumulation indicator 216 may be used to indicate whether to send data to the second device 220. If the parameter data generated by the action that has been executed at the first device 210 reaches a predetermined threshold, the accumulated parameter data may be sent to the second device 220. If the amount of accumulated data does not reach the predetermined threshold, one or more actions may continue to be executed and the LP solution may continue to be performed at the first device 210, so that parameter data to be transmitted is further accumulated.

The proposed technical solution may solve the distributed knapsack problem in each epoch using a uniform threshold condition that may balance the regret, communication and computation costs of the client. In this way, at the first device 210, on the one hand, the goal of maximizing the reward may be achieved while satisfying the consumption constraints, and on the other hand, communication overheads and time overheads caused by too frequent communication between the first device 210 and the second device 220 may be avoided, thereby finding a balance between exploration and utilization and improving the overall performance of federated learning. In addition, during the process of executing actions and updating the action model, the real data collected (for example, user clicks and other operations) is not transmitted, so that the action model may be updated in a distributed manner while ensuring the security of sensitive data.

## *DETAILED PROCESS FOR ACTION EXECUTION*

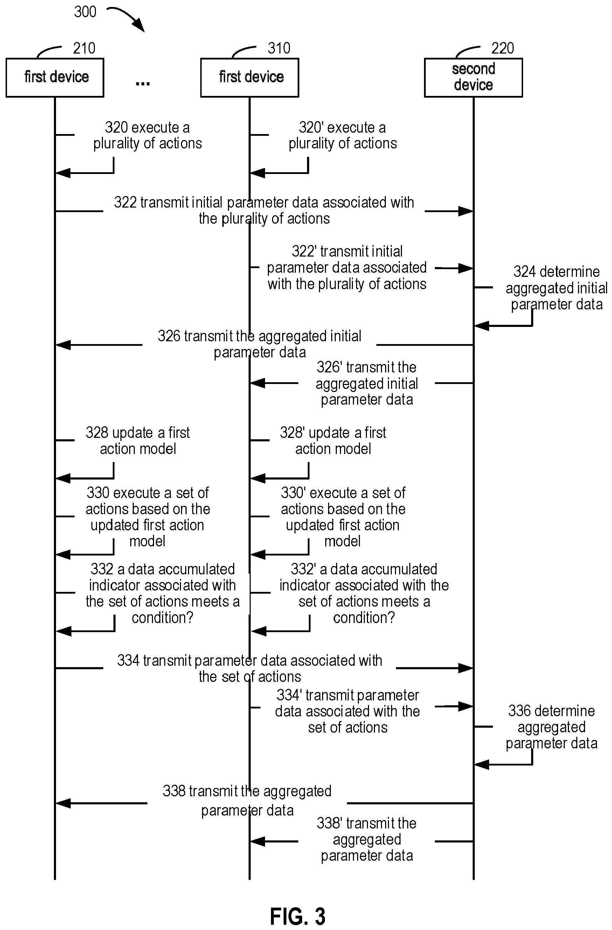

While the brief according to one example implementation of the present disclosure has been described, further details of executing actions in a distributed manner are described below with reference to FIG. 3. For the sake of description, the specific application environment in which actions are executed will be described by taking the data push task as an example. For example, in a data push system, data can be pushed to a terminal device used by a user, and the action here may correspond to an action of pushing data to the user. FIG. 3 illustrates a trajectory diagram 300 of an interactive process for action execution at a plurality of devices according to some implementations of the present disclosure. As shown in FIG. 3, actions may be executed at a plurality of first devices 210 , ... , and 310 , and corresponding action models are updated based on the executed actions. At this point, the first device 210 and the first device 310 may respectively comprise corresponding first action models, and the second device 220 may comprise a second action model.

During the federated learning process, a plurality of actions may be executed at the first device 210. Here, the plurality of actions may be actions of pulling a certain arm of the MAB. In the initial stage, the plurality of actions may be executed 320 in sequence, and initial parameter data associated with the plurality of actions may be transmitted 322 to the second device 220. Similar operations may be performed at the first device 310, for example, a plurality of actions may be executed 320' at the first device 310, and initial parameter data associated with the plurality of actions may be transmitted 322' to the second device 220. The second device 220 may receive initial parameter data from each first device (e.g., the first devices 210, ... , and 310), and then determine 324 aggregated initial parameter data. The second model at the second device 220 may be updated using the aggregated initial parameter data.

Further, the second device 220 may transmit 326 the aggregated initial parameter data to the first device 210. Similarly, the second device 220 may transmit 326' the aggregated initial parameter data to the first device 310. The first action model at the first device 210 may be updated using the aggregated initial parameter data; similarly, the first action model at the first device 310 may be updated using the aggregated initial parameter data. Here, the process indicated by arrows 320 to 328' involves an initialization stage, and the corresponding first action models at the first device 210, ..., 310 and the second action model at the second device 220 may be initially updated.

After the initialization stage, actions to be executed may be determined at each first device using the updated action model. For example, at the first device 210, a set of actions may be executed 330 based on the updated first action model (where the number of the set of actions depends on whether the data accumulation indicator satisfies a predetermined condition). The updated first action model may be utilized to determine one or more actions to be executed and further execute the actions.

Further, a data accumulation indicator associated with the above set of actions may be determined. For example, the data accumulation indicator can be determined using features of actions that have been executed. If the data accumulation indicator satisfies 332 the predetermined condition, a communication round may be initiated from the first device 210 to the second device 220 in order to transmit 334 parameter data associated with the set of actions. If the data accumulation indicator does not meet the predetermined condition, the operation flow may return to the position shown by an arrow 330 and continue to determine and execute subsequent one or more actions based on the updated first action model until the data accumulation indicator associated with the a set of actions that have already been executed satisfies the predetermined condition.

Similar operations may be performed at the first device 310, for example, a set of actions 330' may be executed based on the updated first action model. If the data accumulation indicator associated with a set of actions satisfies 332' the predetermined condition, parameter data associated with the set of actions may be transmitted 334' to the second device 220.

Further, the second device 220 may determine aggregated parameter data based on the received parameter data from each first device. The second model at the second device 220 may be updated using the aggregated parameter data. Further, the second device 220 may transmit 338 the aggregated parameter data to the first device 210. Similarly, the second device 220 may transmit 338' the aggregated parameter data to the first device 310. At this point, the operation flow may return to the position shown by arrows 328 and 328', and each first device may update the local first action model using the newly received parameter data.

According to an example implementation of the present disclosure, a predetermined cycle end condition may be set. For example, a predetermined time length may be set, and the process shown in FIG. 3 is ended when the predetermined time length is reached. It will be understood that although operations at first devices 210 and 310 are only schematically shown in FIG. 3, there may exist more first devices, and the processes performed at each first device may be similar.

By means of the example implementations of the present disclosure, the second action model at the second device 220 is an accurate action model obtained via federated learning technology, and the action model can achieve the goal of maximizing the reward while satisfying the predetermined consumption limit. At this point, the first device 210 does not need to transmit the parameter data of each epoch of LP solution to the second device 220 after executing each action, but can accumulate the parameter data generated by executing a plurality of actions and performs transmission when the data accumulation indicator meets the predetermined condition. In this way, it may be guaranteed that excessive communication overheads will not be incurred during the federated learning process.

Having described the brief of the collaboration between client and server, specific Equations related to the action execution process will be introduced below. According to an example implementation of the present disclosure, FedUCBwK can be implemented under a server-client architecture. Suppose there are M clients, each client can access K actions (arms) of d dimensions, represented as a ∈ [K] := {1,2 ..., K}. At each time t ∈ [T], $a_{t,m}$ actions may be executed and the reward and consumption may be observed at each client m ∈ [M]. The features (that is, context) of $a_{t,m}$ can be expressed as $x(a_{t,m}) \in \mathbb{R}^d$ , the unknown expected reward is expressed as $r_{t,m}$, and the corresponding resource consumption is expressed as $c_{t,m}$. Assume there is a fixed total consumption budget B ∈ $\mathbb{R}_+$ , which is known to the server. B is a strict limit on resource consumption, and the algorithm terminates when B is exhausted. Alternatively, or in addition, the algorithm may terminate when the runtime reaches a predetermined time length T.

According to an example implementation of the present disclosure, a linear structure with global parameters is proposed. In order to obtain the intrinsic correlation between rewards for executing the same action at different clients, it is assumed that the rewards $r_{t,m}$ have a linear structure: $r_{t,m} = \langle \theta, x(a_{t,m}) \rangle + \eta_{t,m}^{(r)}$ , where θ ∈ $\mathbb{R}^d$ ∈ is a fixed but unknown vector, and $\eta_{t,m}^{(r)} \in [-1,1]$ are independent random noise with zero mean for the rewards $r_{t,m}$. Furthermore, it is assumed that consumption $c_{t,m}$ has a linear structure: $c_{t,m} = \langle \beta, x(a_{t,m}) \rangle + \eta_{t,m}^c$ , where β ∈ $\mathbb{R}^d$ is a fixed but unknown parameter vector, and $\eta_{t,m}^c \in$ [-1,1] are independent random noise with zero mean for costs $c_{t,m}$.

In terms of communication, assume there is a central server in a distributed environment, clients may communicate with the server periodically. Specifically, during each communication, the clients may send locally accumulated parameter data to the central server, and then the central server may aggregate the received parameter data to update the action model and calculate a current policy. The central server may then broadcast the policy to all clients. The communication costs of the algorithm may be defined as the scalar (integer or real) amount of communication between the server and client.

In terms of computation, the computation problem may be described as a MAB problem in a linear static environment, which will be solved in the present disclosure by decomposing the original problem into multiple linear programming problems. The present disclosure defines the computation cost of an algorithm as the number of solving the linear programming problem.

In terms of sensitive data protection, the context for each client is static, which can be understood that for each client, its characteristics and usage habits will not change within a certain period of time. Although it is not time-varying, the context of each client is personal information, and clients still need to protect their sensitive data. Moreover, the reward of each action, e.g., user feedback (click and purchase behavior) to data in the data push system, is also the sensitive information at clients. The technical solution of the present disclosure only requires each client to transmit the parameters calculated in each epoch instead of directly transmitting the raw data.

According to an example implementation of the present disclosure, an objective function in terms of regret may be determined based on the following Equation, that is, the objective function is to execute actions that minimize the expected regret among all clients:

$$\text{REGRET(T)} = \text{OPT} - \left( \sum_{t=1}^{T} \sum_{m=1}^{M} \langle x(a_{t,m}), \theta \rangle \right) \qquad \text{Equation 1}$$

In this Equation, REGRET(T) represents the objective function, OPT represents the total expected reward for the optimal policy, T represents the predetermined time length, M represents the number of clients, $a_{t,m}$ represents the action executed at the client m at time t, $x(a_{t,m})$ represents the characteristics of the corresponding action, θ represents a reward-related parameter. At the same time, it is necessary to ensure that the consumption does exceed the overall budget of consumption, that is, $\sum_{t=1}^{T} \sum_{m=1}^{M} c_{t,m} \leq B$ .

In terms of distributed choices, regret can represent the difference between the total reward obtained by the algorithm of the present disclosure and OPT. At this point, the problem description of the present disclosure adopts a federated setting, and the present disclosure expands the OPT-LP problem to a distributed scenario.

In terms of LP relaxation, the present disclosure defines a linear programming relaxation for the expected total reward under a mixed-arm. The present disclosure may describe any possible expected reward and possible expected consumption for each action based on the following linear operation:

$$
\begin{aligned}
\max_p \quad & X^\mathsf{T}\theta \cdot p \\
\text{s.t} \quad & X^\mathsf{T}\beta \cdot p \leq \frac{B}{T} \\
& p \in \Delta
\end{aligned}
\qquad \text{Equation 2}
$$

In the above Equation, $X \in \mathbb{R}^{d \times K}$ is a matrix that contains x of K arms, $\Delta = \{p : \sum_{i=1}^{K} p_i = 1, p_i \geq 0, i = i, \dots, K\}$ . $p_i$ can represent the probability of pulling arm i. Let$LP(X^\mathsf{T}\theta, X^\mathsf{T}\beta)$represent the value of the LP relaxation, and$\beta$represent the consumption-related parameter. It can be concluded that:

$$
LP(X^\mathsf{T}\theta, X^\mathsf{T}\beta) \geq \frac{\text{OPT}}{T} \qquad \text{Equation 3}
$$

$LP(X^\mathsf{T}\theta, X^\mathsf{T}\beta)$is an upper bound for OPT, which is denoted as OPT-LP in the present disclosure. Therefore, the present disclosure can use OPT-LP to replace OPT in the regret analysis.

In terms of distributed decomposition, when there are multiple clients, how to allocate the budget among them may be decided. In the case of a static context setting, each arm has a corresponding context that does not change over time for all clients. Thus, decomposition may be performed by dividing the budget equally among all clients.

First, according to the LP relaxation, the budget can be allocated into each epoch so that at each time period t, the budget will reach BIT. Suppose the budget is further divided and assigned it to M clients. Then for each client, a distributed LP problem can be expressed in the following form:

$$
\begin{aligned}
\max_{p_m} \quad & X^\mathsf{T}\theta \cdot p_m \\
\text{s.t} \quad & X^\mathsf{T}\beta \cdot p_m \leq B_m \\
& p_m \geq 0
\end{aligned}
\qquad \text{Equation 4}
$$

In the above Equation, $B_m$represents the budget allocated to the client m. Based on Equation 4, it may be derived that:

$$
\begin{aligned}
\min_{y_m} \quad & B_m \cdot y_m \\
\text{s.t} \quad & X^\mathsf{T}\beta y_m \geq X^\mathsf{T}\theta \\
& y_m \geq 0
\end{aligned}
\qquad \text{Equation 5}
$$

If there is an optimal solution, then $B_m \geq \min(X^\mathsf{T}\beta)$ for each m. A more intuitive understanding is that the current budget must be higher than the arm with the lowest cost. Otherwise, there will be no arm that can be pulled. By using the strong duality theorem, the following Equation can be obtained:

$$
X^\mathsf{T}\theta \cdot p_m = B_m \cdot y_m \qquad \text{Equation 6}
$$

Therefore, the present disclosure can further obtain the total reward of M clients:

$$R = \sum_{m \in M} B_m \cdot y_m = By = M \frac{B_m}{M} \cdot y_m \qquad \text{Equation 7}$$

As $y_m$ = y for all m = M. That is, no matter how the budget is allocated, as long as there is an optimal solution, the objective achieved by the LP relaxation optimal solution is equal. For simplicity, the budget can be divided equally among between the clients. Therefore, for any $X^T\theta, X^T\beta$, letDisLP($X^T\theta, X^T\beta$)represent the value of the following linear programming.

$$\max_p \qquad X^T\theta \cdot p$$
$$\text{s.t} \qquad X^T\beta \cdot p \le \frac{B}{MT} 1$$
$$p \in \Delta \qquad \text{Equation 8}$$

MT · DisLP($X^T\theta, X^T\beta$) can be used instead of OPT in the analysis of regret.

To protect the sensitive data of client data, the present disclosure only communicates parameter data, and each client saves the raw data locally. Therefore, the calculation of the knapsack problem and arm selection is performed locally on each client. The central server is only responsible for aggregating the received parameter data and then sending it to each client. Furthermore, to meet the computation requirement, the central server sendsB/M(Alternatively, or in addition, the budget can also be unevenly divided) instead of the original total budget to each client. Each client only knows its own allocated budget without knowing the total value. In this way, sensitive data on both sides can be protected.

In order to solve the computation and communication efficiency problems, a unified communication scheme is proposed. Specifically, within a time period, when the amount of accumulated information (i.e., pulled arms and corresponding feedback results) is limited, the amount of parameter data will not change much. Therefore, the present disclosure can divide the total time into different communication rounds where communication and synchronization is performed at the end of each communication round and the LP problem is solved. When estimating parameters, the linear gaming machine problem can be treated based on "optimism in the face of uncertainty", thereby obtaining optimistic estimates of the parameters $\beta$ and $\theta$.

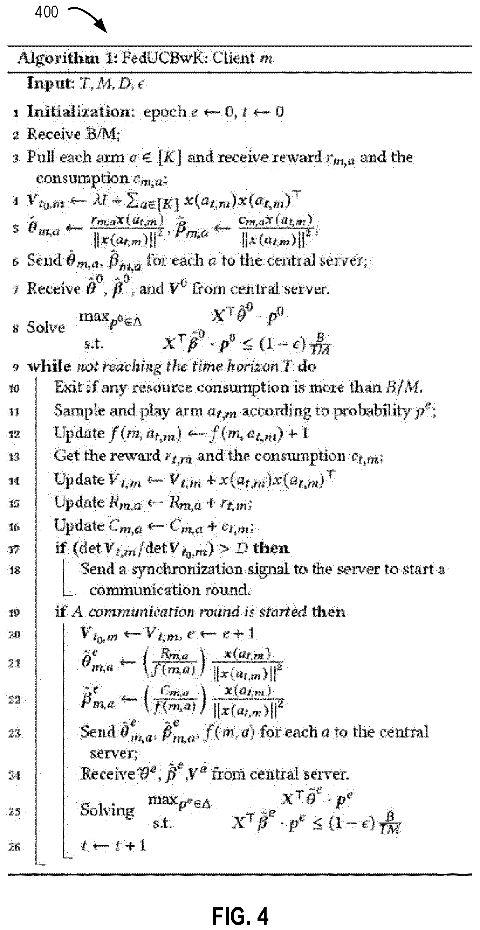

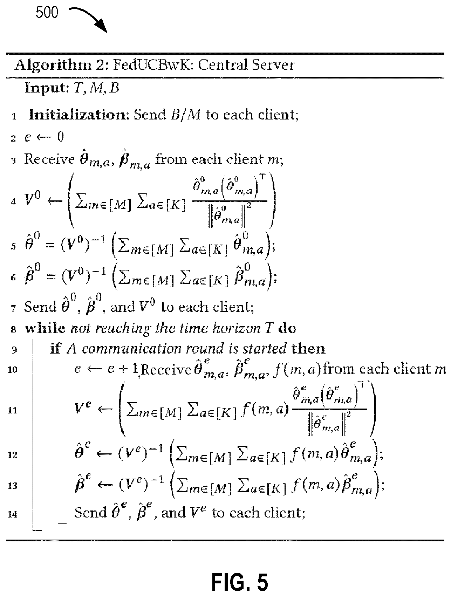

The specific process for action execution will be described with reference to the specific steps in FIGS. 4 and 5. FIG. 4 illustrates a block diagram of an algorithm 400 executed at a first device (e.g., a client) according to some implementations of the present disclosure, and FIG. 5 illustrates a block diagram of an algorithm 500 executed at a second device (e.g., a server) according to some implementations of the present disclosure. The processes performed at the client m and the central server can be implemented based on the algorithms shown in FIGS. 4 and 5 respectively.

In summary, in the initial stage each clientmcan execute various actions separately and observe feedback (the corresponding reward and consumption) for initialization. After initialization until the algorithm stops (i.e., when the time rangeTis not reached and the budget is not exhausted), communication may proceed round by round at the client. In epoch e of each communication round in the algorithm 400, each clientmcan execute an action according to the policy for this epoch $p^e$, calculated at the end of the previous epoch (Line 11). Then, the number of times f(m, a) of executing the action a(line 12) is recorded, and the matrix$V_{t,m}$, the total reward$R_{m,a}$and the total consumption of each action $C_{m,a}$(lines 14-16) are updated. Then, adding together the matrices of all actions, the total matrix$V_{t,m}$of the client m can be obtained. This matrix can be viewed as a matrix containing data up to time t(line 17). Then, it is determined whether the following Equation is true (i.e., it is judged whether the data accumulation indicator meets the predetermined condition):

$$\left( \det V_{t,m} / \det V_{t_0,m} \right) > D \qquad \text{Equation 9}$$

In this Equation, D is the threshold to determine whether synchronization is required. An intuitive understanding of det $V_{t,m}$, /det$V_{t_0,m}$ is the amount of historical information accumulated in this epoch. According to an example implementation of the present disclosure, D may be set to different values (for example, a constant 1 or other values). If a communication round starts, the client will reset$V_{t_0,m}$and enter a new epoch (line 21). Using historical data samples

$V_{m,a}$and the corresponding total reward $R_{m,a}$and consumption, the parameters $\widehat{\theta}^e_{m,a}$ and $\widehat{\beta}^e_{m,a'}$ can be estimated by applying linear regression and projecting them onto the x(a) dimension. According to an example implementation of the present disclosure, the context x is static, so the direction $x(a_{t,m})$ is the same at all times and so can be uniformly represented by x(a).

$$\hat{\theta}^e_{m,a} = \left(\frac{R_{m,a}}{f(m,a)}\right)\frac{x(a_{t,m})}{\|x(a_{t,m})\|^2}$$

$$\hat{\beta}^e_{m,a} = \left(\frac{C_{m,a}}{f(m,a)}\right)\frac{x(a_{t,m})}{\|x(a_{t,m})\|^2} \qquad \text{Equation 10}$$

Afterwards, all clients can send their calculated parameter data and the number of action executions to the central server for aggregation. At this point, the central server only has the relevant parameters $\hat{\theta}^e_{m,a}$ and $\hat{\beta}^e_{m,a}$ of different actions, but does not have any contextual information on different actions, so it cannot obtain the matrix. Since $\hat{\theta}^e_{m,a}$ and x(a) are in the same direction, the unit vector of x(a) can be obtained, $\tilde{\theta}^e_{m,a} / \left\|\tilde{\theta}^e_{m,a}\right\|$. Additionally, the central server can record the number of executions for each action. Therefore, the present disclosure can summarize and calculate aggregated parameter data by:

$$V^e = \left(\sum_{m\in[M]}\sum_{a\in[K]} f(m,a)\frac{\hat{\theta}^e_{m,a}\left(\hat{\theta}^e_{m,a}\right)^\top}{\|\hat{\theta}^e_{m,a}\|^2}\right)$$

$$\hat{\theta}^e = V^e\left(\sum_{m\in[M]}\sum_{a\in[K]} f(m,a)\hat{\theta}^e_{m,a}\right)$$

$$\hat{\beta}^e = V^e\left(\sum_{m\in[M]}\sum_{a\in[K]} f(m,a)\hat{\beta}^e_{m,a}\right) \qquad \text{Equation 11}$$

After receiving the above parameters from the central server, each client can maintain a confidence set $\mathbb{C}^e_\theta \subseteq \mathbb{R}^d$ for the parameter θ and a confidence set $\mathbb{C}^e_\beta \subseteq \mathbb{R}^d$ for the parameter β in epoch e. Specifically, following techniques commonly used in previous work on linear context gaming machines, the confidence set $\mathbb{C}^e_\theta$ is an ellipsoid-centered $\hat{\theta}^e$ while the confidence set $\mathbb{C}^e_\theta$ is ellipsoid-centered $\hat{\beta}^e$. The confidence set $\mathbb{C}_{e,\beta}$ can be constructed using $\hat{\beta}^e$ and $V^e$.

$$\mathbb{C}^e_\theta = \left\{\theta \in \mathbb{R}^d : \left\|\hat{\theta}^e - \theta\right\|_{V^e} \le \ell_e\right\}$$

$$\mathbb{C}^e_\beta = \left\{\beta \in \mathbb{R}^d : \left\|\hat{\beta}^e - \beta\right\|_{V^e} \le \ell_e\right\} \qquad \text{Equation 12}$$

In the above Equation, $\ell_e = \sqrt{2\log\left(\frac{\det(V^e)^{1/2}\det(\lambda I)^{-1/2}}{\delta}\right)} + \lambda^{1/2}$. This explains the reason why the synchronization condition is set to Equation 9: The volume of the confidence ellipsoids for both θ and β depend on $\det(V_{t,m})$. If $\det(V_{t,m})$ does not vary greatly, it will not affect the confidence guarantee even if the confidence ellipsoid changes slightly. Also, if it does not vary greatly, it will always remain $V^e$ in each epoch e. Therefore, $\det(V^e)$ instead of $\det(V_{t,m})$ can be used to participate in the calculation. Then, an optimistic estimate of these parameters can be used:

$$\tilde{\theta}^e = \text{argmax}_{\theta \in \mathbb{C}_\theta^e} \left( \max_{a \in [K]} \langle x(a), \theta \rangle \right) \qquad\qquad \text{Equation 13}$$

$$\tilde{\beta}^e = \text{argmin}_{\beta \in \mathbb{C}_\beta^e} \left( \max_{a \in [K]} \langle x(a), \beta \rangle \right) \qquad\qquad \text{Equation 14}$$

At this point, the upper confidence limit for rewards and the lower confidence limit for consumption can be calculated. Each client will then calculate and update the policy of selecting the arm for the next epoch. The following linear programming problem can be solved:

$$\max_{p^e \in \Delta} \qquad X^\top \tilde{\theta}^e \cdot p^e$$

$$\text{s.t} \qquad X^\top \tilde{\beta}^e \cdot p^e \leq (1 - \epsilon) \frac{B}{TM} \qquad\qquad \text{Equation 15}$$

It will be understood that to meet the hard constraint restrictions, $(1-\epsilon)\frac{B}{TM}$ can be used in place of $\frac{B}{TM}$ to allow some estimation error. At this point, the algorithm will not end prematurely due to running out of budget.

Having described the Equations involved in algorithms 400 and 500, further details of the interaction between the client and the server are described below with reference to FIGS. 4 and 5. As shown in FIG. 4, the input data at the client may include: T, indicating a predetermined time length; M, indicating the number of clients; D, a predetermined threshold, indicating whether to initiate a predetermined condition for transmitting data to the second device 220; e, indicating the constraint on consumption. In the initialization stage of the client, as shown in line 1 of the algorithm 400, intermediate variables e(the number of epochs) and t (time of execution) may be set. As shown in line 3 of the algorithm 400, data B/M(representing the budget each client can use) can be received from the server.

Referring to FIG. 5, the algorithm 500 executed at the server is described, where input data may be received: T, representing a predetermined length of time; M, representing the number of clients; and B, representing the overall budget of resources that can be allocated (the corresponding consumption can be deducted from this overall budget when executing each action). In line 1 of the algorithm 500, dataB/M can be sentto each client, that is, the amount of available resources allocated to each client. In line 2 of the algorithm 500, epocheto perform communication with the client may be set, and you can set the epoch e may be set to 0 in the initial stage.

According to an example implementation of the present disclosure, a plurality of actions may be executed at the client, and a plurality of rewards and consumption associated with the plurality of actions may be obtained respectively. Return to FIG. 4 describing the operations performed at the client. As shown in line 3 of the algorithm 400, each action $ar_{m,a}$ may be executed at the client, and the reward $r_{m,a}$ and consumption $c_{m,a}$ corresponding to executing the action a at the client m may be obtained. According to an example implementation of the present disclosure, as shown in line 4 of the algorithm 400, a data accumulation indicator may be determined based on characteristics of each action in a set of actions. Here, $\lambda$ and I can have predetermined numerical values, and$x(a_{t,m})$can represent the characteristics of the action $a_{t,m}$ performed at the client m at time t. During the initialization stage, the data accumulation indicator $V_{t0,m}$ can be determined based on the summation of the outer product of the characteristics of the K actions performed at the client. In the subsequent stages to the initialization stage, the outer product of the characteristics of the actions that have been performed is continuously accumulated, and then the data accumulation indicator is updated.

With the example implementations of the present disclosure, the data accumulation indicator $V_{t0,m}$ may represent the size of data accumulated as a result of actions performed at the client, which may be used to measure whether to transmit the accumulated data to the server. In this way, data can be transmitted from the client to the server only when the accumulated data meets the predetermined condition, thereby reducing communication-related overheads and improving the performance of federated learning.

According to an example implementation of the present disclosure, initial parameter data associated with the plurality of actions may be determined based on the plurality of actions, the plurality of rewards, and the plurality of consumption. Then, the initial parameter data can be transmitted to the server, so that the server can update the corresponding action model using the initial parameter data. Here, the reward $r_{m,a}$can represent the benefit yielded by executing the action $a_{t,m}$, and the consumption$_{m,a}$can represent the consumption of resources allocated to the client, incurred by executing the action. In the application environment of data push, the reward can represent the increase in click rate due to pushing certain data, and consumption can represent the resources consumed due to pushing the data. With the example implementation of the present disclosure, sufficient consideration is given to both factors of reward and consumption due to execution of actions, thereby maximizing the reward while satisfying consumption constraints.

Still with reference to FIG. 4, description is presented to a specific method of determining initial parameter data, where the initial parameter data may include multiple aspects of data: reward data and consumption data. According to an example implementation of the present disclosure, the reward data $\hat{\theta}_{m,a}$ can be determined based on the linear calculation of actions and rewards; and the consumption data $\hat{\beta}_{m,a}$ can be determined based on the linear calculation of actions and consumption. Specifically, the reward data $\hat{\theta}_{m,a}$and the consumption data $\hat{\beta}_{m,a}$can be determined respectively based on the Equation shown in line 5 of the algorithm 400, where a corresponding reward parameter and consumption parameter can be conveniently determined based on the linear calculation of the characteristics of a set of K actions$x(a_{t,m})$and the corresponding reward $r_{m,a}$ and consumption $c_{m,a}$. Furthermore, the number of executions for each action may be counted, and then the number data in the parameter data is determined. In the initialization stage, the number of executions for each action is 1. With subsequent executions, the number of executions for each action can be increased.

As shown in line 6 of the algorithm 400, in the initialization stage, after each action has been executed, reward data $\hat{\theta}_{m,a}$ and consumption data $\hat{\beta}_{m,a}$ for each action can be sent from the client to the server so that the server determines the aggregated parameter data to update the action model at the server.

More details of the process performed at the server will be described with reference to FIG. 5 below. According to an example implementation of the present disclosure, a plurality of initial parameter data is received from a plurality of clients respectively at the server. The initial parameter data from each client among the plurality of initial parameter data here is determined based on a plurality of actions executed at the client and a plurality of rewards and a plurality of consumption respectively associated with the plurality of actions.

Specifically, in line 3 of the algorithm 500, the server may receive initial parameter data from each client$m$(i.e., reward data$\hat{\theta}_{m,a}$and consumption data $\hat{\beta}_{m,a}$determined in line 4 and line 5 of the algorithm 400). Here, each initial parameter data may come from a corresponding client and is determined based on K actions executed at the client and a plurality of rewards and a plurality of consumption associated with the K actions respectively. In this way, the server can receive initial parameter data from each client respectively, and then perform an aggregation operation based on the received initial parameter data from each client, thereby obtaining aggregated initial parameter data and updating the action model at the server.

Further, aggregated initial parameter data may be determined at the server based on the plurality of initial parameter data. A specific Equation for generating the aggregated initial parameter data is shown in lines 4 to 6 of the algorithm 500. Here, the aggregated initial parameter data may comprise: aggregated accumulated data, aggregated reward data, and aggregated consumption data. Specifically, an equation for determining the aggregated cumulative data is shown in line 4. For example, the aggregated accumulated data $V^0$ in the aggregated parameter data can be determined based on the reward data. As shown in line 4 of the algorithm 500, a ratio of the outer product of the reward data from each client to the square of the norm of the reward data can be determined and then summed. Data from each of M clients can be aggregated. For example, the sums for each client may be added together to get the aggregated accumulated data $V^0$.

Further, an equation for determining the aggregated reward data $\hat{\theta}^0$ in the aggregated initial parameter data based on the reward data $\hat{\theta}_{m,a}$ and the aggregated accumulated data $V^0$ is shown in line 5 of the algorithm 500; and an equation n for determining the aggregated consumption data $\hat{\beta}^0$ in the aggregated initial parameter data based on the consumption data $\hat{\beta}_{m,a}$ and the aggregated accumulated data $V^0$ is shown in line 6. In this way, the action model at the server can be updated based on parameter data from each client in the initial stage, thereby improving the accuracy of the action model in a distributed training manner.

Then, the server can transmit the aggregated initial parameter data to the plurality of clients respectively, so that the plurality of clients can respectively update local action models based on the aggregated initial parameter data. Specifically, in line 7 of the algorithm 500, the determined aggregated initial parameter data (including $V^0$, $\hat{\theta}^0$ and $\hat{\beta}^0$) may be transmitted to each client. In this way, each client can update the local action model based on the received aggregated initial parameter data, thereby realizing federated learning.

Further, the client may receive aggregated initial parameter data for updating the local action model (the aggregated initial parameter data is determined by the second device based on the initial parameter data), so as to update the local action model using the aggregated initial parameter data. Returning to FIG. 4, description is presented to further operations performed at each client. In line 7 of the algorithm 400, aggregated initial parameter data (i.e., including $V^0$, $\hat{\theta}^0$ and $\hat{\beta}^0$) can be received from the server. Further, at the client, a vector $p°$ that satisfies the maximization condition can be solved based on the Equation shown in line 8 of the algorithm 400. The vector includes K dimensions, and the $i^{th}$ dimension represents the confidence of executing the $i^{th}$ action among the K actions. It will be understood that $\tilde{\theta}^0$ in

line 8 may be determined based on Equation 13 described above, and $\beta°$ in line 8 may be determined based on Equation 14 described above.

At this point, the initialization operation at the client ends, and a set of the plurality of actions may be executed in subsequent operations. When the accumulated data indicator associated with the executed action meets the predetermined condition, the corresponding parameter data may be transmitted from the client to the server. In line 9 of the algorithm 400, the termination condition of the operation process can be set, that is, the algorithm is terminated when the execution time reaches the predetermined time length T. In line 10 of the algorithm 400, it can be judged whether the resources allocated to the client have been exhausted, that is, whether the corresponding budget allocated has been exhausted. If the budget has not yet been exhausted, the corresponding action can be selected and executed based on the determined confidence of executing the action. If the budget has been exhausted, the loop is exited. In this way, the federated learning process can be managed in a more flexible way and terminated when needed.

According to an example implementation of the present disclosure, a target action may be determined from the plurality of actions by a vector output by the updated action model. In the first loop after the initialization stage, as shown in line 11 of the algorithm 400, a target action $a_{t,m}$ to be executed at this time may be determined based on the vector $p^e$ (e is 0 at this time), and various parameters at the client may be updated based on the action to $a_{t,m}$. As shown in line 12 of the algorithm 400, the number of executions of the action $a_{t,m}$ can be performed incrementally $f(m, a_{t,m})$; as shown in line 13, the reward $r_{m,a}$ and consumption $c_{m,a}$ associated with executing the action may be obtained respectively; as shown in line 14, the data accumulated indicator $V_{t,m}$ may be updated based on the characteristics of the target action; as shown in line 15, the reward data $R_{m,a}$ (i.e., the summation of reward $r_{m,a}$) at the client may be updated; as shown in line 16, the consumption data $C_{m,a}$ (i.e., the summation of consumption $c_{m,a}$) may be updated.

Further, as shown in line 17, it can be judged whether the accumulated data indicator $V_{t,m}$ at this time meets the predetermined condition (that is, whether Equation 9 described above is established). If the judgment result is "yes", the operation flow advances to line 18, and the client can send a synchronization signal to the server in order to start a communication round. If the judgment result is "No", the operation flow continues to perform the next epoch of operations.

As shown in line 19, if it is determined that the communication round has been started, the operations shown in lines 20 to 26 are performed. Specifically, as shown in line 20, the parameter $V_{t_0,m}$ used as a comparison basis in the next epoch can be updated, and the current epoch e can be incremented. Further, the parameter data may be updated using the target action, as well as a target reward and target consumption associated with the target action. Specifically, the reward data $\hat{\theta}^e_{m,a}$ in the epoch e in the parameter data can be updated based on the Equation shown in line 21, and the consumption data $\hat{\beta}^e_{m,a}$ in the epoch e in the parameter data can be updated based on the Equation shown in line 22. Further, in line 23, the client can send the updated parameter data to the server (for example, including the

reward data $\hat{\theta}^e_{m,a}$, the consumption data $\hat{\beta}^e_{m,a'}$ and the number of executions of each action $f(m, a_{t,m})$).

With reference to FIG. 5, description is presented to the process performed at the server. In line 8 of the algorithm 500, it can be judged whether the predetermined time length T is reached. If the judgment result is "yes", the loop operation shown in lines 8 to 14 is terminated. If the judgment result is "no", the operation flow proceeds to line 9 to judge whether the communication round has been started at each client. If a communication round has already been started, the steps shown in lines 10 to 14 are performed. At this point, as shown in line 10, the server can increment the epoch e of the communication round and receive updated parameter data from each client.

Specifically, parameter data from each of the plurality of clients may be received separately. Here, the parameter data from a client of the plurality of clients among the plurality of parameter data is transmitted from the client to the server in response to that a data accumulated indicator associated with the client meets a predetermined condition, and the data accumulated indicator indicates the amount of data to be transmitted from the client to the server. In other words, the parameter data received here is accumulated data formed after the training process at the client accumulates to a certain stage. In this way, the client does not have to transmit parameter data from a single action execution one by one, but executes a set of actions at the client depending on a specific predetermined condition and then transmits corresponding parameter data to the server. As a result, the number of communication epochs between the client and the server can be reduced, thereby reducing communication overheads while ensuring the training effects.

According to an example implementation of the present disclosure, the parameter data received by the server may comprise reward data and consumption data respectively associated with the set of actions performed at the client.

For a specific client m, the parameter data may comprise the reward data $\hat{\theta}^e_{m,a}$ and consumption data $\hat{\beta}^e_{m,a}$ of the

client m. Here, the reward data $\hat{\theta}^e_{m,a}$ can represent the revenue generated by executing each action in the set of actions at the client m; and the consumption data $\hat{\beta}^e_{m,a}$ can represent the consumption of resources allocated to the client, generated by executing each action in the set of actions at the client m. Further, the parameter data may comprise the frequency data for each action $f(m, a_{t,m})$. The frequency data can identify the number of executions of an action in the set of actions executed at the client m. In this way, the updated parameters for the action model generated based on different action data at each client can be collected from each client in a distributed manner, thereby facilitating the improvement of the training precision of the action model.

According to an example implementation of the present disclosure, the aggregated parameter data may be determined in the following manner. For example, the aggregated accumulated data in the aggregated parameter data may be determined based on the frequency data and the reward data. Specifically, as shown in line 11 of the algorithm 500, the aggregated accumulated data $V^e$ in the aggregated parameter data for the current communication round e can be determined based on the frequency data and the reward data.

According to an example implementation of the present disclosure, the aggregated reward data in the aggregated parameter data may be determined based on the frequency data and the reward data. Specifically, as shown in line 12, the aggregated reward data $\hat{\theta}^e$ in the aggregated parameter data for the current communication round e can be determined based on the frequency data and the reward data.

According to an example implementation of the present disclosure, the aggregated consumption data in the aggregated parameter data may be determined based on the frequency data and the consumption data. As shown in line 13, the aggregated consumption data $\hat{\beta}^e$ in the aggregated parameter data for the current communication round e can be determined based on the frequency data and consumption data. In this way, the aggregated parameter data can be determined in a simple and clear-cut way, and further the action model at the server can be updated.

Further, as shown in line 13, the server can send the aggregated parameter data to each client (e.g., including the aggregated accumulated data $V^e$, aggregated reward data $\hat{\theta}^e$ and aggregated consumption data $\hat{\beta}^e$ for the current communication round e). At this point, these aggregated parameter data can be used to update the action model at each client, thereby continuously performing federated learning.

According to an example implementation of the present disclosure, the client may receive aggregated parameter data for updating the client's local action model from the server, and the aggregated parameter data is determined by the server based on the parameter data (as in lines 11 to 13 of the algorithm 500). Still referring to FIG. 4, in line 24 of the algorithm 400, the client may receive the aggregated accumulated data $V^e$, aggregated reward data $\hat{\theta}^e$, and aggregated consumption data $\hat{\beta}^e$ for the current communication round e. Further, as shown in line 25, the received data can be used to solve and obtain a vector $p^e$ describing the probability of executing each action. In this way, the client's local action model can be continuously updated using the received aggregated parameter data.

Description has been presented above to determining whether to start a communication round for transmitting parameter data from the client to the server depending on whether the data accumulated indicator meets the predetermined condition. In this way, the communication round can be started only when the data accumulated indicator meets the predetermined condition, thereby achieving the goal of reducing communication overheads. According to an example implementation of the present disclosure, the algorithm shown in FIG. 4 can be executed at a plurality of clients, and the algorithm shown in FIG. 5 can be executed at the server. The plurality of clients and the server can transmit parameter data via communication rounds, thereby implementing the process of updating action models at different locations using federated learning.

According to an example implementation of the present disclosure, the above process may be terminated when the predetermined condition is met (for example, a predetermined time length is reached, or a predetermined budget is exhausted). At this point, the training process of the action model ends, and corresponding tasks may be executed using the trained action model.

Theoretical guarantees in terms of regret, communication cost, and computation cost will be provided below. For the regret, the following proof is provided.

Theorem 6.1: Using the algorithms 400 and 500 with $\epsilon = \dfrac{d\sqrt{DMT}\log(MT)}{B}$ , the following upper bound probability on the regret boundary can be obtained:

$$\text{REGRET(T)} = 0\left(d\sqrt{DMT}\log(MT)(\tfrac{\text{OPT}}{B}+1)\right) \qquad\qquad \text{Equation 16}$$

Lemma 6.1: For any $\delta > 0$, with probability $1 - M\delta$, $\theta$ always lies in the constructed $\mathbb{C}_{t,m}$ for all t and all m.

Lemma 6.2: Let $\{X_t\}_{t=1}^{\infty}$ represent a sequence in $\mathbb{R}^{\mathbf{d}}$, V is a d * d positive definite matrix and define

$$V_t = V + \sum_{s=1}^{t} X_s X_s^{\mathsf{T}}.$$

It can be concluded that

$$\log\left(\frac{\det(V_n)}{\det(V)}\right) \le \sum_{t=1}^{n} \|X_t\|_{V_{t-1}^{-1}}^2$$

Furthermore, if $\|X_t\|_2 \le L$ for all t, then

$$\sum_{t=1}^{n} \min\left\{1, \|X_t\|_{V_{t-1}^{-1}}^2\right\} \le 2(\log \det(V_n) - \log \det V)$$

$$\le 2(d\log((\text{trace}(V) + nL^2)/d) - \log \det V)$$

Lemma 6.3: With the probability 1 - M8, the single-step difference $\text{diff}_{t,m}, = \langle \tilde{\theta}_{t,m} - \theta, x(a_{t,m})\rangle$ is bounded by

$$\text{diff}_{t,m} \le 2\left(\sqrt{2\log\left(\frac{\det(V_{t,m})^{\frac{1}{2}}}{\delta \det(\lambda I)^{\frac{1}{2}}}\right)} + \lambda I^{\frac{1}{2}}\right)\left\|x(a_{t,m})\right\|_{V_{t,m}^{-1}} = O\left(\sqrt{d\log\frac{t}{\delta}}\right)\left\|x(a_{t,m})\right\|_{V_{t,m}^{-1}}.$$

Lemma 6.4: (Azuma-Hoeffding inequality). If a supermartingale $(Y_t: t \ge 0)$, corresponding to filtration $\mathcal{F}_t$, satisfies $|Y_t - Y_{t-1}| \le c_t$ for some constant $c_t$, for all t = 1, ... T, then for any $a \ge 0$,

$$\Pr(Y_T - Y_0 \ge a) \le e^{-\frac{a^2}{2\sum_{t=1}^{TC} c_t^2}}$$

Lemma 6.5: Let A, B and C be positive semi-definite matrices such that A = B + C. Then, there is

$$\sup_{x \ne 0} \frac{x^{\mathsf{T}} A x}{x^{\mathsf{T}} B x} \le \frac{\det(A)}{\det(B)}$$

Lemma 6.6: Define the Diff(T) as:

$$\text{Diff(T)} = \sum_{t=1}^{T} \sum_{m=1}^{M} \langle \tilde{\theta}_{t,m} - \theta, x(a_{t,m})\rangle \qquad\qquad \text{Equation 17}$$

Then the Diff(T) is bounded by $O(d\sqrt{DMT\log(MT)})$.

In the following, the proof process is provided. First of all, although the same estimator $\tilde{\theta}^e$ is used in each epoch e, for analysis purposes $\tilde{\theta}_{t,m}$ can be used to represent it for each time period t and each client m, that is, $\tilde{\theta}_{t,m} = \tilde{\theta}^e$, t ∈ e. In the present disclosure, the number of epochs will be divided by communication rounds. Assuming that there are E epochs, the aggregated matrix in the epoch e is expressed as $V^e$. By the communication threshold, the following may be obtained

$$1 \leq \frac{\det(V_j)}{\det(V_{j-1})} \leq D$$

Otherwise, there will be a synchronization. The MT pulls are all performed by one client in a round-robin fashion (i.e., according to $a_{1,1}, a_{1,2}, ..., a_{1,M}, a_{2,1}, ... , a_{T,M}$). $\tilde{V}_{t,m} = \lambda I + \Sigma\{(p, q): (p < t) \vee (p = t \wedge q < m)\} \times (a_{p,q}) \times (a_{p,q})^T$ may be used to represent the matrix that can be obtained when the client executes $x(a_{t,m})$. With the disclosed algorithm, each client m will use a random policy received from the central server, generated by the aggregated matrix in each communication round. Therefore, the gap between matrices can be constrained as:

$$1 \leq \frac{\det(\tilde{V}_{t,m})}{\det(V^e)} \leq \frac{\det(V_j)}{\det(V_{j-1})} \leq D$$

Therefore, by Lemma 6.5,

$$\text{diff}_{t,m} \leq O\left(\sqrt{d\log\frac{T}{\delta}}\right)\sqrt{x(a_{t,m})^T(V^e)^{-1}x(a_{t,m})}$$

$$\leq O\left(\sqrt{d\log\frac{T}{\delta}}\right)\sqrt{x(a_{t,m})^T V_{t,m}^{-1} x(a_{t,m}) \cdot \frac{\det(\tilde{V}_{t,m})}{\det(V^e)}}$$

$$\leq O\left(\sqrt{d\log\frac{T}{\delta}}\right)\sqrt{D x(a_{t,m})^T V_{t,m}^{-1} x(a_{t,m})}$$

Then, the single client difference bound can be used and the difference proved. Suppose $\mathcal{B}_e$ represents the set of (t, m) pairs that belong to epoch e, using Lemma 6.2 and 6.3, letting $\gamma = dDMT\log(\frac{T}{\delta})$, it may be obtained

$$\text{Diff(T)} = \sum_{m}^{M}\sum_{e=1}^{E}\sum_{(t,m)\in\mathcal{B}_e} \text{diff}_{t,m}$$

$$\leq \sqrt{MT\sum_{e=1}^{E}\sum_{(t,m)\in\mathcal{B}_e} \text{diff}^2_{t,m}}$$

$$\leq O\left(\sqrt{\gamma\sum_{e=1}^{E}\sum_{(t,m)\in\mathcal{B}_e} \min\left(\|x(a_{t,m})\|^2_{\tilde{V}^2_{t,m}},1\right)}\right)$$

$$\leq O\left(\sqrt{\gamma\sum_{e=1}^{E}\log\left(\frac{\det(V^e)}{\det(V^{e-1})}\right)}\right)$$

$$\leq O\left(\sqrt{\gamma\sum_{e=1}^{E}\log\left(\frac{\det(V^E)}{\det(V_0)}\right)}\right)$$

$$\leq O\left(d\sqrt{DMT}\log(MT)\right)$$

$\tilde{\theta}_{t,m}$ and $\tilde{\beta}_{t,m}$ estimates satisfy the following properties. With the probability $1-M\delta$,

Property (1): $\tilde{\theta}_{t,m} \geq \theta$, $\tilde{\beta}_{t,m} \leq \beta$.

Property (2):

$$\left|\sum_{t=1}^{T}\sum_{m=1}^{M}\left(X^{\intercal}\tilde{\theta}_{t,m}\cdot p_t - \langle\theta,x(a_{t,m})\rangle\right)\right| \leq O\left(d\sqrt{DMT}\log(MT)\right),$$

$$\left|\sum_{t=1}^{T}\sum_{m=1}^{M}\left(X^{\intercal}\tilde{\beta}_{t,m}\cdot p_t - \langle\beta,x(a_{t,m})\rangle\right)\right| \leq \epsilon B.$$

Since

$$\mathbb{E}\left[\langle\tilde{\theta}_{t,m},x(a_{t,m})\rangle\big|p_t,X^{\intercal}\tilde{\theta}_{t,m}\right] = X^{\intercal}\tilde{\theta}_{t,m}\cdot p_t,$$

it can be obtained, using Lemma 6.4, with probability $1 - M\delta$,

$$\left|\sum_{t=1}^{T}\left(\langle\tilde{\theta}_{t,m},x(a_{t,m})\rangle - X^{\intercal}\tilde{\theta}_{t,m}\cdot p_t\right)\right| \leq O\left(\sqrt{\log\left(\frac{d}{\delta}\right)T}\right)$$

Then, according to the Diff(T)in Lemma 6.6, the gap between the real reward of the pulled arm and the expected reward under the fractional solution can be bounded using the confidence upper bound,

$$\sum_{t,m}\left(X^\mathsf{T}\tilde{\theta}_{t,m} \cdot p_t - \langle\theta, x(a_{t,m})\rangle\right):$$

$$\left|\sum_{t=1}^{T}\sum_{m=1}^{M}\left(X^\mathsf{T}\tilde{\theta}_{t,m} \cdot p_t - \langle\theta, x(a_{t,m})\rangle\right)\right| \leq O\left(d\sqrt{DMT}\log(MT)\right)$$

In the same way as above, it can further be obtained

$$\left|\sum_{t=1}^{T}\sum_{m=1}^{M}\left(X^\mathsf{T}\tilde{\beta}_{t,m} \cdot p_t - \langle\beta, x(a_{t,m})\rangle\right)\right| \leq O\left(d\sqrt{DMT}\log(MT)\right)$$

Then $\epsilon = \dfrac{d\sqrt{DMT}\log(MT)}{B}$ can be set. Property (2) can be obtained so far. According to property (1), the definition and problem decomposition of OPT can be expressed as:

$$\sum_{m=1}^{M}\sum_{t=1}^{T}X^\mathsf{T}\tilde{\theta}_{t,m} \cdot p_t = \sum_{m=1}^{M}\sum_{t=1}^{T}LP\left(X^\mathsf{T}\tilde{\theta}_{t,m}, X^\mathsf{T}\tilde{\beta}_{t,m}, \epsilon\right)$$

$$\geq MT \cdot LP(X^\mathsf{T}\theta, X^\mathsf{T}\beta, \epsilon)$$

$$\geq (1 - \epsilon)OPT$$

$$\sum_{m=1}^{M}\sum_{t=1}^{T}X^\mathsf{T}\tilde{\beta}_{t,m} \cdot p_t \leq (1 - \epsilon)B \qquad\qquad \text{Equation 18}$$

Then, using Property (2) and Equation 18, the hard constraint can be satisfied, i.e.,

$$\sum_{t=1}^{T}\sum_{m=1}^{M}\langle\beta, x(a_{t,m})\rangle \leq B$$

Therefore, the algorithm will not terminate before timeT. The total real reward obtained can be expressed as REW:

$$REW \geq \sum_{t=1}^{T}\sum_{m=1}^{M}\langle\theta, x(a_{t,m})\rangle$$

Then

$$REW = (1 - \epsilon)OPT - O\left(d\sqrt{DMT}\log(MT)\right),$$

$$\epsilon OPT = O\frac{d\sqrt{DMT}\log(MT)OPT}{B},$$

$$REGRET(T) = O\left(d\sqrt{DMT}\log(MT)\left(\frac{OPT}{B}+1\right)\right)$$

In terms of communication cost, according to the algorithm 400 and the algorithm 500, it can be determined that if $\frac{\det V_{j+1}}{\det V_j} > D$, then a communication round is started, that is:

$$\log\frac{\det V_{j+1}}{\det V_j} > \log D$$

Then by Lemma 6.2, it can be obtained:

$$P\log D < \sum_{j=0}^{P-1}\left(\log\frac{\det V_{j+1}}{\det V_j}\right) < d\log\left(1+\frac{MT}{\lambda d}\right)$$

Further,

$$P < O\left(d\log\frac{MT}{D}\right)$$

According to an example implementation of the present disclosure, communication is only required at the end of each epoch when each client sends O(dK) numbers to the server and then downloads $O(d^2)$ numbers. Therefore, in each epoch, the communication cost isO(Md(d + K)). Therefore, the total communication cost is

$$O\left(Md(d+K)\log\frac{MT}{D}\right).$$

In terms of computation cost, in both the algorithm 400 and the algorithm 500, the same threshold is used, thus linear programming is calculated when a communication round starts. The local feature vectorsXare private information and not known to the central server, so the LP calculation is only done at each client. Therefore, the computation cost is $O\left(M\log\frac{MT}{D}\right)$.

In the context of the present disclosure, OPT can be defined as Distributed-OPT, and the feasibility of this solution is demonstrated through a distributed decomposition of LP. Here, FedUCBwK keeps the total budget private through budget allocation and executes policy computation on clients. It transmits model update parameters instead of raw data to protect the client's sensitive data. Based on the transmitted parameters, the present disclosure designs a unified communication and computation threshold to solve the distributed LP problem in each epoch and control the regret by a budget deflator. In addition, a trade-off can be made between regret, communication cost and computation cost. The present disclosure can obtain a high-probability regret bound under the communication cost and computation cost.

According to an example implementation of the present disclosure, various tasks can be executed on real datasets in order to verify the performance of the task execution process described above. The performance of many different technical solutions can be compared. Specifically, FedUCBwK can represent the algorithm proposed in the present disclosure; FedUCBwK-FullCom represents the technical solution in which clients performs communication and calculation in each epoch (D at this time can be set to a smaller value); FedUCBwK-NoCom represents a technical solution in which clients do not perform communication (Dat this time can be set to a larger value); FedUCBwK-FewCom represents a technical solution in which clients only perform a small amount of communication and calculation (at this time,Dcan be set to an intermediate value); FedUCB and FedUCB-FullCom represent existing technical solutions.

According to an example implementation of the present disclosure, the technical solution according to the present disclosure can be verified on multiple public datasets. Specifically, it can be verified on the MovieLens-100K dataset. To handle sparse and incomplete rating matrices, the present disclosure uses collaborative filtering to complete the rating matrix, and then employs non-negative matrix factorization with 10 latent factors to get R = WH, where

$$W \in \mathbb{R}^{943 \times 10}, H \in \mathbb{R}^{10 \times 1682}.$$

According to an example implementation of the present disclosure, the dataset can be used to simulate two scenarios for the data push system. The first scenario involves pushing proper data to a specific group of users. The present disclosure regards each data push corresponding to a certain amount of reward and consumption as an action. The objective is to find the optimal data push for a specific group of users. To accomplish this, the k-means algorithm can be applied to the column vectors of W to produce 20 classes. One class can be selected as the specific user group u, and let $\theta_u$ be the center of the selected user group. The present disclosure can then apply the k-means algorithm to the row vectors of H to produce K = 10 groups (actions). At this point, the action executed corresponds to the action of finding the optimal data push for the specific user group.

The second scenario involves finding suitable recommended targeted users for a specific category of data push. Each targeted user can be considered as an action and the k-means algorithm is applied to the raw vectors of H in order to produce 20 classes, selecting one class as one specific category of data push a. Let $\theta_a$ be the center of the selected data push category, and the corresponding consumption parameter $\beta$ is randomly generated. The k-means algorithm can be applied to the row vectors of W to produce K = 10 targeted users (actions). In the above experiments, it is possible to set K = 20 and d = 10. Additionally, it is possible to set M = 10 and T = 1000. At this time, the action executed corresponds to the action of selecting a suitable recommended targeted user.

In terms of human activity recognition, a dataset can be built from the recordings of 30 data contributors. A crowd-sourcing task can be simulated using the dataset, where each activity can be treated as an action and the label for each activity is assumed to be the expected reward. Furthermore, a possible consumption can be generated for each data sample, the consumption parameter $\beta$ can be calculated, and the class center of each action can be calculated. The center is used as a standard feature of the action to solve LP problems and OPT problems. In the simulated crowd-sourcing scenario, each task can be regarded as capturing corresponding human activity features. Each task will incur certain consumption and reward in terms of resources. The goal is to learn the optimal task. There can be six classes of tasks, each having 561-dimensional features, so in the gaming machine experiments of the present disclosure, K = 6 and d = 561 can be set. Additionally, M = 10 and T = 1000 can be set.

In terms of the results of data push recommendation and targeted user recommendation, an explanation is given to the reasons why the regret curve of the Federated Bandits with Knapsacks (FBwK) problem differs from that of the traditional gaming machine, where the latter part of the regret curve in FBwK sometimes increases steeply. When calculating the accumulated regret at each time period based on the technical solution of the present disclosure, if the budget is exhausted, the algorithm will stop while the OPT continues to accumulate rewards, leading to a sharp increase in regret. This phenomenon is particularly obvious since the existing FedUCB (DisLinUCB) and FedUCB-FullCom do not consider the budget constraint. They prioritize finding the arm with the highest reward, thus incurring lower regret in the early stage. When the budget is exhausted during a certain time period, the algorithm terminates prematurely and ends up performing poorly.

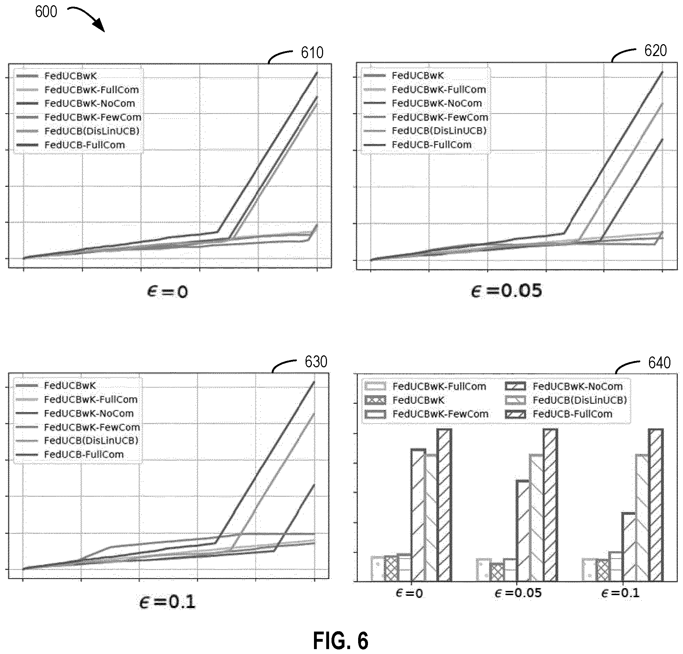

FIG. 6 illustrates a block diagram 600 of the comparison of the performance of an action execution process according to some implementations of the present disclosure with that of an action execution process according to various other technical solutions. Block diagrams 610, 620, and 630 in FIG. 6 respectively correspond to performance statistics when $\varepsilon$ IS set to different predetermined values. The abscissa in the block diagram corresponds to time, and the ordinate corresponds to accumulated regret. A block diagram 640 shows a comparison of accumulated regrets when $\varepsilon$ is set to different predetermined values.

As shown in FIG. 6, for the data push tasks, the disclosed algorithm is always close to FedUCBwK-FullCom (which can be considered as the minimum regret that can be obtained in the single agent case), and much better than other baseline methods. FedUCBwK can find data pushes with higher rewards and lower costs, overcoming the problem of the early end. The results show that FedUCBwK can significantly reduce accumulated regret. For different settings, the total budget is set bigger from the top to the bottom. At this point, FedUCBwK and FedUCB are closer than when the budget is scarce, because the algorithms are less affected by the constraint. When the budget increases, the regret is less likely to increase dramatically. Furthermore, when gradually increasing $\varepsilon$, it is not easy to over-consume the budget and cause the algorithm to end prematurely.

It will be understood that it is not the case that the larger $\varepsilon$ the better, but a proper $\varepsilon$ needs to be selected. For example, in the data push task, it is better $\varepsilon = 0.05$, and when $\varepsilon$ is too large, the estimation of the consumption will become too small, which will affect the selection of the optimal arm. Although the budget is preserved, the too cautious selection makes the final budget increase instead.

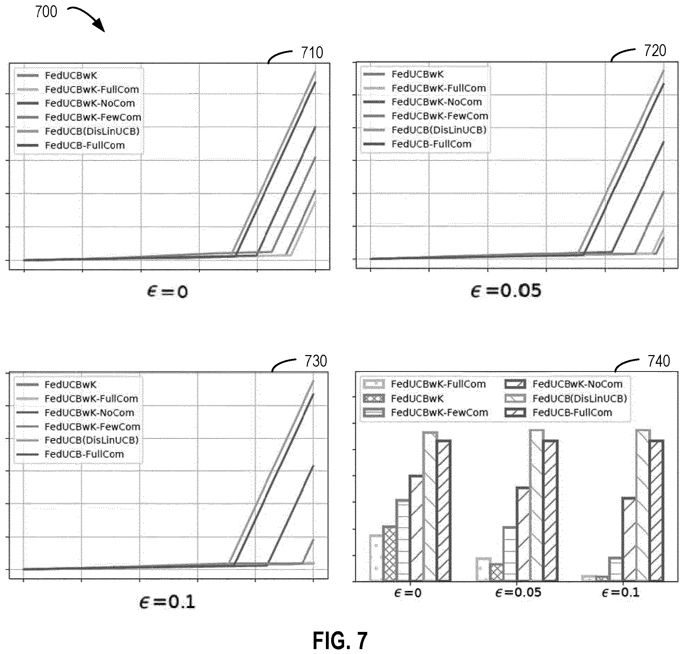

FIG. 7 illustrates a block diagram 700 of the comparison of the performance of an action execution process according to some implementations of the present disclosure with that of an action execution process according to various other technical solutions. Block diagrams 710, 720, and 730 in FIG. 7 respectively correspond to performance statistics when $\varepsilon$ is set to different predetermined values. The abscissa in the block diagram corresponds to time, and the ordinate corresponds to accumulated regret. A block diagram 740 shows a comparison of accumulated regrets when $\varepsilon$ is set to different predetermined values.

For the targeted user recommendation task, FIG. 7 shows similar results. Compared with data push recommendation, the targeted user recommendation task is easier and converges more quickly as shown in FIG. 7. In this task, FedUCBwK performs better when $\varepsilon = 0.1$ is selected. Specifically, compared with FedUCB, FedUCBwK can reduce THE regret by up to 96.82%. Additionally, to explore experimental results in more scenarios, the budget can be set to fully sufficient. It can be found that at this time, FedUCB, FedUCB-FullCom, and FedUCBwK can all achieve results that are basically consistent with FedUCBwK-FullCom, and are very close to OPT. In contrast, technical solutions with less or no communication and computation cannot effectively aggregate information and update policies, resulting in poorer results.

According to an example implementation of the present disclosure, the method described above can be further applied to the allocation of crowd-sourcing tasks, at which point the experimental results are also similar. Alternatively, or in addition, the method described above may be further applied to other application scenarios such as network parameter configuration.

By means of the example implementations of the present disclosure, a knapsack-based federated linear gaming machine solution is implemented. This technical solution can be used to minimize the regret by selecting the action from K actions that maximizes the reward based on the collaboration of M clients while meeting a predetermined budget. According to an example implementation of the present disclosure, only the parameter data of the model is transmitted instead of raw data, thereby protecting the clients' sensitive data. Further, the communication and computation cost involved in federated learning can be reduced by a unified threshold, and the overall regret can be controlled by solving the distributed knapsack problem in epochs.

### *EXAMPLE PROCESS*

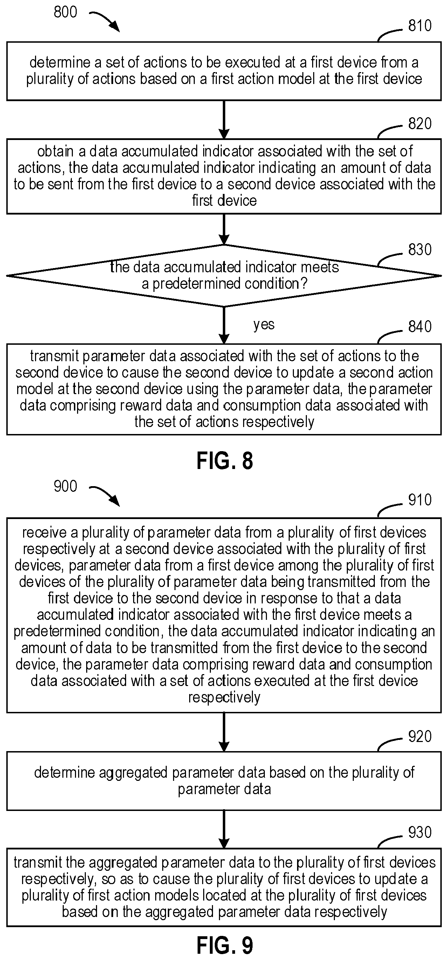

FIG. 8 illustrates a flowchart of a method for action execution at a client according to some implementations of the present disclosure. At block 810, a set of actions to be executed at a first device is determined from a plurality of actions based on a first action model at the first device. At block 820, a data accumulated indicator associated with the set of actions is obtained, the data accumulated indicator indicating an amount of data to be sent from the first device to a second device associated with the first device. At block 830, in response to that the data accumulated indicator meets a predetermined condition, the operation flow proceeds to block 840. At block 840, parameter data associated with the set of actions is transmitted to the second device to cause the second device to update a second action model at the second device using the parameter data, the parameter data comprising reward data and consumption data associated with the set of actions respectively.

According to an example implementation of the present disclosure, determining the data accumulated indicator comprises: determining the data accumulated indicator based on features of each action in the set of actions.

According to an example implementation of the present disclosure, the method further comprises: determining the parameter data associated with the set of actions based on the set of actions, and a set of rewards and a set of consumption associated with the set of actions respectively, wherein the reward in the set of rewards represents the revenue yielded by executing an action in the set of actions, and the consumption in the set of consumption represents the consumption of resources allocated to the first device, generated by executing the action.

According to an example implementation of the present disclosure, determining the parameter data comprises: determining the reward data based on a linear calculation of the set of actions and the set of rewards; determining the consumption data based on a linear calculation of the set of actions and the set of consumption; and determining frequency data in the parameter data based on the number of executions associated with the set of actions.

According to an example implementation of the present disclosure, the method further comprises: determining a target action from the plurality of actions based on the first action model; updating the data accumulated indicator based on features of the target action; and updating the parameter data using the target action and a target reward and target consumption associated with the target action.

According to an example implementation of the present disclosure, the method further comprises: receiving aggregated parameter data for updating the first action model from the second device, the aggregated parameter data being determined by the second device based on the parameter data; and updating the first motion model using the aggregated parameter data.

According to an example implementation of the present disclosure, the aggregated parameter data comprises aggregated reward data, aggregated consumption data, and aggregated accumulated data.

According to an example implementation of the present disclosure, the method further comprises: determining a target action to be executed at the first device from the plurality of actions using the updated first action model.

According to an example implementation of the present disclosure, the method further comprises: before determining the set of actions, executing the plurality of actions at the first device; obtaining a plurality of rewards and a plurality of consumption associated with the plurality of actions respectively; determining initial parameter data associated with the plurality of actions based on the plurality of actions, the plurality of rewards, and the plurality of consumption; and transmitting the initial parameter data to the second device to cause the second device to update the second action model using the initial parameter data.

According to an example implementation of the present disclosure, the method further comprises: receiving aggregated initial parameter data for updating the first action model from the second device, the aggregated initial parameter data being determined by the second device based on the initial parameter data; and updating the first action model using the aggregated initial parameter data.

According to an example implementation of the present disclosure, the method further comprises: terminating the method in response to at least any of: a time length for performing the method reaching a threshold time length; or consumption associated with at least one action that has been executed at the first device reaching threshold consumption.

According to an example implementation of the present disclosure, the first device is a client device for performing federated learning, and the second device is a server device for performing the federated learning.

According to an example implementation of the present disclosure, the plurality of actions comprises at least any one of: a data push action, a user selection action, a crowd-sourcing task allocation action, and a network parameter setting action.

FIG. 9 illustrates a flowchart of a method 900 for action execution at a server according to some implementations of the present disclosure. At block 910, a plurality of parameter data from a plurality of first devices respectively are received at a second device associated with the plurality of first devices, parameter data from a first device among the plurality of first devices of the plurality of parameter data being transmitted from the first device to the second device in response to that a data accumulated indicator associated with the first device meets a predetermined condition, the data accumulated indicator indicating an amount of data to be transmitted from the first device to the second device, the parameter data comprising reward data and consumption data associated with a set of actions executed at the first device respectively. At block 920, aggregated parameter data is determined based on the plurality of parameter data. At block 930, the aggregated parameter data is transmitted to the plurality of first devices respectively, so as to cause the plurality of first devices to update a plurality of first action models located at the plurality of first devices based on the aggregated parameter data respectively.

According to an example implementation of the present disclosure, the plurality of parameter data comprises: reward data of the first device, the reward data representing revenue yielded by the set of actions executed at the first device; consumption data of the first device, the consumption data representing consumption of resources allocated to the first device, generated by the set of actions executed at the first device; and frequency data of the first device, the frequency data representing the number of executions of an action in the set of actions.

According to an example implementation of the present disclosure, determining the aggregated parameter data comprises: determining aggregated accumulated data in the aggregated parameter data based on the frequency data and the reward data; determining aggregated reward data in the aggregated parameter data based on the frequency data and the reward data; and determining aggregated consumption data in the aggregated parameter data based on the frequency data and the consumption data.

According to an example implementation of the present disclosure, the method further comprises: updating a second action model at the second device based on the plurality of parameter data.

According to an example implementation of the present disclosure, the method further comprises: determining an action to be executed using the updated second action model.

According to an example implementation of the present disclosure, the method further comprises: before receiving a plurality of parameter data respectively from the plurality of first devices at the second device, receiving a plurality of initial parameter data respectively from the plurality of first devices at the second device, the initial parameter data from the first device among the plurality of initial parameter data being determined based on a plurality of actions executed at the first device and a plurality of rewards and a plurality of consumption associated with the plurality of actions respectively; determining aggregated initial parameter data based on the plurality of initial parameter data; and transmitting the aggregated initial parameter data to the plurality of first devices respectively, so as to cause the plurality of first devices to update a plurality of first action models at the plurality of first devices based on the aggregated initial parameter data.

According to an example implementation of the present disclosure, the method further comprises: updating a second action model at the second device based on the plurality of initial parameter data.

According to an example implementation of the present disclosure, the first device is a client device for performing federated learning, and the second device is a server device for performing the federated learning.

According to an example implementation of the present disclosure, the plurality of actions comprises at least any one of: a data push action, a user selection action, a crowd-sourcing task allocation action, and a network parameter setting action.

*EXAMPLE APPARATUS AND DEVICE*

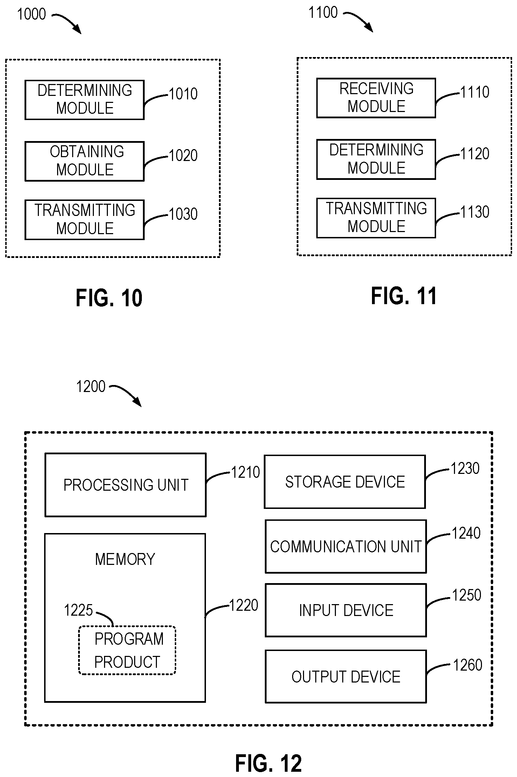

FIG. 10 illustrates a block diagram of an apparatus 1000 for action execution according to some implementations of the present disclosure. The apparatus comprises: a determining module 1010 configured for determining a set of actions to be executed at a first device from a plurality of actions based on a first action model at the first device; an obtaining module 1020 configured for obtaining a data accumulated indicator associated with the set of actions, the data accumulated indicator indicating an amount of data to be sent from the first device to a second device associated with the first device; and a transmitting module 1030 configured for, in response to that the data accumulated indicator meets a predetermined condition, transmitting parameter data associated with the set of actions to the second device to cause the second device to update a second action model at the second device using the parameter data, the parameter data comprising reward data and consumption data associated with the set of actions respectively.

According to an example implementation of the present disclosure, determining the data accumulated indicator comprises: determining the data accumulated indicator based on features of each action in the set of actions.

According to an example implementation of the present disclosure, the apparatus further comprises: a parameter determining module configured for determining the parameter data associated with the set of actions based on the set of actions, and a set of rewards and a set of consumption associated with the set of actions respectively, wherein the reward in the set of rewards represents the revenue yielded by executing an action in the set of actions, and the consumption in the set of consumption represents the consumption of resources allocated to the first device, generated by executing the action.

According to an example implementation of the present disclosure, the parameter determining module comprises: a first determining module configured for determining the reward data based on a linear calculation of the set of actions and the set of rewards; a second determining module configured for determining the consumption data based on a linear calculation of the set of actions and the set of consumption; and a third determining module configured for determining frequency data in the parameter data based on the number of executions associated with the set of actions.

According to an example implementation of the present disclosure, the apparatus further comprises: a target action determining module configured for determining a target action from the plurality of actions based on the first action model; an indicator updating module configured for updating the data accumulated indicator based on features of the target action; and a parameter updating module configured for updating the parameter data using the target action and a target reward and target consumption associated with the target action.

According to an example implementation of the present disclosure, the apparatus further comprises: a receiving module configured for receiving aggregated parameter data for updating the first action model from the second device, the aggregated parameter data being determined by the second device based on the parameter data; and a model updating module configured for updating the first motion model using the aggregated parameter data.

According to an example implementation of the present disclosure, the aggregated parameter data comprises aggregated reward data, aggregated consumption data, and aggregated accumulated data.

According to an example implementation of the present disclosure, the apparatus further comprises: a target action determining module configured for determining a target action to be executed at the first device from the plurality of actions using the updated first action model.

According to an example implementation of the present disclosure, the apparatus further comprises: an executing module configured for, before determining the set of actions, executing the plurality of actions at the first device; a data obtaining module configured for obtaining a plurality of rewards and a plurality of consumption associated with the plurality of actions respectively; an initial parameter determining module configured for determining initial parameter data associated with the plurality of actions based on the plurality of actions, the plurality of rewards, and the plurality of consumption; and an initial parameter transmitting module configured for transmitting the initial parameter data to the second device to cause the second device to update the second action model using the initial parameter data.

According to an example implementation of the present disclosure, the apparatus further comprises: a receiving module configured for receiving aggregated initial parameter data for updating the first action model from the second device, the aggregated initial parameter data being determined by the second device based on the initial parameter data; and a module updating module configured for updating the first action model using the aggregated initial parameter data.

According to an example implementation of the present disclosure, the apparatus further comprises: a terminating module configured for terminating the method in response to at least any of: a time length for performing the method reaching a threshold time length; or consumption associated with at least one action that has been executed at the first device reaching threshold consumption.

According to an example implementation of the present disclosure, the first device is a client device for performing federated learning, and the second device is a server device for performing the federated learning.

According to an example implementation of the present disclosure, the plurality of actions comprises at least any one of: a data push action, a user selection action, a crowd-sourcing task allocation action, and a network parameter setting action.

FIG. 11 illustrates a block diagram of an apparatus 1100 for action execution according to some implementations of the present disclosure. The apparatus 1100 comprises: a receiving module 1110 configured for receiving a plurality of parameter data from a plurality of first devices respectively at a second device associated with the plurality of first devices, parameter data from a first device among the plurality of first devices of the plurality of parameter data being transmitted from the first device to the second device in response to that a data accumulated indicator associated with the first device meets a predetermined condition, the data accumulated indicator indicating an amount of data to be transmitted from the first device to the second device, the parameter data comprising reward data and consumption data associated with a set of actions executed at the first device respectively; a determining module 1120 configured for determining aggregated parameter data based on the plurality of parameter data; and a transmitting module 1130 configured for transmitting the aggregated parameter data to the plurality of first devices respectively, so as to cause the plurality of first devices to update a plurality of first action models located at the plurality of first devices based on the aggregated parameter data respectively.

According to an example implementation of the present disclosure, the plurality of parameter data comprises: reward data of the first device, the reward data representing revenue yielded by the set of actions executed at the first device; consumption data of the first device, the consumption data representing consumption of resources allocated to the first device, generated by the set of actions executed at the first device; and frequency data of the first device, the frequency data representing the number of executions of an action in the set of actions.

According to an example implementation of the present disclosure, the determining module comprises: a first determining module configured for determining aggregated accumulated data in the aggregated parameter data based on the frequency data and the reward data; a second determining module configured for determining aggregated reward data in the aggregated parameter data based on the frequency data and the reward data; and a third determining module configured for determining aggregated consumption data in the aggregated parameter data based on the frequency data and the consumption data.

According to an example implementation of the present disclosure, the apparatus further comprises: updating a second action model at the second device based on the plurality of parameter data.

According to an example implementation of the present disclosure, the apparatus further comprises: determining an action to be executed using the updated second action model.

According to an example implementation of the present disclosure, the apparatus further comprises: an initial parameter receiving module configured for, before receiving a plurality of parameter data respectively from the plurality of first devices at the second device, receiving a plurality of initial parameter data respectively from the plurality of first devices at the second device, the initial parameter data from the first device among the plurality of initial parameter data being determined based on a plurality of actions executed at the first device and a plurality of rewards and a plurality of consumption associated with the plurality of actions respectively; an initial aggregated parameter determining module configured for determining aggregated initial parameter data based on the plurality of initial parameter data; and an initial aggregated parameter transmitting module configured for transmitting the aggregated initial parameter data to the plurality of first devices respectively, so as to cause the plurality of first devices to update a plurality of first action models at the plurality of first devices based on the aggregated initial parameter data.

According to an example implementation of the present disclosure, the apparatus further comprises: updating a second action model at the second device based on the plurality of initial parameter data.

According to an example implementation of the present disclosure, the first device is a client device for performing federated learning, and the second device is a server device for performing the federated learning.

According to an example implementation of the present disclosure, the plurality of actions comprises at least any one of: a data push action, a user selection action, a crowd-sourcing task allocation action, and a network parameter setting action.

FIG. 12 illustrates a block diagram of a computing device 1200 in which a plurality of implementations of the present disclosure may be implemented. It should be understood that the computing device 1200 shown in FIG. 12 is only an example and should not constitute any limitation on the functionality and scope of the implementations described herein. The computing device shown in FIG. 12 may be used to implement the method described above.

As shown in FIG. 12, the computing device 1200 is in the form of a general computing device. The components of electronic device 1200 may include, but are not limited to, one or more processors or processing units 1210, a memory 1220, a storage device 1230, one or more communication units 1240, one or more input devices 1250, and one or more output devices 1260. The processing unit 1210 may be an actual or virtual processor and can execute various processes based on the programs stored in the memory 1220. In a multiprocessor system, multiple processing units execute computer executable instructions in parallel to improve the parallel processing capability of the electronic device 1200.

The computing device 1200 typically includes multiple computer storage media. Such medium may be any available medium that is accessible to the computing device 1200, including but not limited to volatile and non-volatile medium, removable and non-removable medium. The memory 1220 may be volatile memory (for example, a register, cache, a random access memory (RAM)), a non-volatile memory (for example, a read-only memory (ROM), an electrically erasable programmable read-only memory (EEPROM), a flash memory), or any combination thereof. The storage device 1230 may be any removable or non-removable medium, and may include a machine readable medium such as a flash drive, a disk, or any other medium, which may be used to store information and/or data (such as training data for training) and may be accessed within the computing device 1200.

The computing device 1200 may further include additional removable /non-removable, volatile/non-volatile storage medium. Although not shown in FIG. 12, a disk driver for reading from or writing to a removable, non-volatile disk (such as a "floppy disk"), and an optical disk driver for reading from or writing to a removable, non-volatile optical disk may be provided. In these cases, each driver may be connected to the bus (not shown) by one or more data medium interfaces. The memory 1220 may include a computer program product 1225, which has one or more program units configured to perform various methods or acts of various implementations of the present disclosure.

The communication unit 1240 communicates with a further computing device through the communication medium. In addition, functions of components in the computing device 1200 may be implemented by a single computing cluster or multiple computing machines, which can communicate through a communication connection. Therefore, the computing device 1200 may be operated in a networking environment using a logical connection with one or more other servers, a network personal computer (PC), or another network node.

The input device 1250 may be one or more input devices, such as a mouse, a keyboard, a trackball, etc. The output device 1260 may be one or more output devices, such as a display, a speaker, a printer, etc. The computing device 1200 may also communicate with one or more external devices (not shown) through the communication unit 1240 as required. The external device, such as a storage device, a display device, etc., communicate with one or more devices that enable users to interact with the computing device 1200, or communicate with any device (for example, a network card, a modem, etc.) that makes the computing device 1200 communicate with one or more other electronic devices. Such communication may be executed via an input/output (I/O) interface (not shown).

According to an example implementation of the present disclosure, a computer-readable storage medium is provided on which computer-executable instructions are stored, wherein the computer-executable instructions are executed by a processor to implement the method described above. According to an example implementation of the present disclosure, a computer program product is further provided. The computer program product is tangibly stored on a non-transient computer-readable medium and includes computer-executable instructions, which are executed by a processor to implement the method described above. According to an example implementation of the present disclosure, a computer program product is provided on which a computer program is stored, the program, when executed by a processor, implementing the method described above.

Various aspects of the present disclosure are described herein with reference to the flow chart and/or the block diagram of the method, the apparatus, the device and the computer program product implemented in accordance with the present disclosure. It would be appreciated that each block of the flowchart and/or the block diagram and the combination of each block in the flowchart and/or the block diagram may be implemented by computer-readable program instructions.

These computer-readable program instructions may be provided to the processing units of general-purpose computers, specialized computers or other programmable data processing devices to produce a machine that generates an apparatus to implement the functions/actions specified in one or more blocks in the flow chart and/or the block diagram when these instructions are executed through the computer or other programmable data processing apparatuses. These computer-readable program instructions may also be stored in a computer-readable storage medium. These instructions enable a computer, a programmable data processing apparatus and/or other devices to work in a specific way. Therefore, the computer-readable medium containing the instructions includes a product, which includes instructions to implement various aspects of the functions/actions specified in one or more blocks in the flowchart and/or the block diagram.

The computer-readable program instructions may be loaded onto a computer, other programmable data processing apparatus, or other devices, so that a series of operational steps may be performed on a computer, other programmable data processing apparatus, or other devices, to generate a computer-implemented process, such that the instructions which execute on a computer, other programmable data processing apparatuses, or other devices implement the functions/acts specified in one or more blocks in the flowchart and/or the block diagram.

The flowchart and the block diagram in the drawings show the possible architecture, functions and operations of the system, the method and the computer program product implemented in accordance with the present disclosure. In this regard, each block in the flowchart or the block diagram may represent a part of a unit, a program segment or instructions, which contains one or more executable instructions for implementing the specified logic function. In some alternative implementations, the functions labeled in the block may also occur in a different order from those labeled in the drawings. For example, two consecutive blocks may actually be executed in parallel, and sometimes can also be executed in a reverse order, depending on the function involved. It should also be noted that each block in the block diagram and/or the flowchart, and combinations of blocks in the block diagram and/or the flowchart, may be implemented by a dedicated hardware-based system that performs the specified functions or acts, or by the combination of dedicated hardware and computer instructions.

Various implementations of the present disclosure have been described above. The above description is an example but not exhaustive, and is not limited to the disclosed implementations. Without departing from the scope and spirit of the described implementations, many modifications and changes are obvious to ordinary skill in the art. The selection of terms used in the present disclosure aims to best explain the principles, practical application or improvement of technology in the market of each implementation, or to enable other ordinary skill in the art to understand the various implementations disclosed herein.

**Claims**

1. A method (800) for action execution, comprising:

   determining (810) a set of actions to be executed at a first device from a plurality of actions based on a first action model at the first device;
   obtaining (820) a data accumulated indicator associated with the set of actions, the data accumulated indicator indicating an amount of data to be sent from the first device to a second device associated with the first device; and
   in response to that the data accumulated indicator meets a predetermined condition, transmitting (830) parameter data associated with the set of actions to the second device to cause the second device to update a second action model at the second device using the parameter data, the parameter data comprising reward data and consumption data associated with the set of actions respectively.

2. The method (800) of claim 1, wherein determining the data accumulated indicator comprises: determining the data accumulated indicator based on features of each action in the set of actions.

3. The method (800) of claim 1 or 2, further comprising: determining the parameter data associated with the set of actions based on the set of actions, and a set of rewards and a set of consumption associated with the set of actions respectively, wherein the reward in the set of rewards represents the revenue yielded by executing an action in the set of actions, and the consumption in the set of consumption represents the consumption of resources allocated to the first device, generated by executing the action.

4. The method (800) of claim 3, wherein determining the parameter data comprises:

   determining the reward data based on a linear calculation of the set of actions and the set of rewards;
   determining the consumption data based on a linear calculation of the set of actions and the set of consumption; and
   determining frequency data in the parameter data based on the number of executions associated with the set of actions.

5. The method (800) of any of claims 1 to 4, further comprising:

   determining a target action from the plurality of actions based on the first action model;
   updating the data accumulated indicator based on features of the target action; and
   updating the parameter data using the target action and a target reward and target consumption associated with the target action.

6. The method (800) of any of claims 1 to 5, further comprising:

   receiving aggregated parameter data for updating the first action model from the second device, the aggregated parameter data being determined by the second device based on the parameter data; and
   updating the first motion model using the aggregated parameter data.

7. The method (800) of claim 6, wherein the aggregated parameter data comprises aggregated reward data, aggregated consumption data, and aggregated accumulated data; and/or wherein the method further comprises: determining a target action to be executed at the first device from the plurality of actions using the updated first action model.

8. The method (800) of any of claims 1 to 7, further comprising: before determining the set of actions,

   executing the plurality of actions at the first device;
   obtaining a plurality of rewards and a plurality of consumption associated with the plurality of actions respectively;
   determining initial parameter data associated with the plurality of actions based on the plurality of actions, the plurality of rewards, and the plurality of consumption; and
   transmitting the initial parameter data to the second device to cause the second device to update the second action model using the initial parameter data, and
   wherein the method further comprises:

   receiving aggregated initial parameter data for updating the first action model from the second device, the aggregated initial parameter data being determined by the second device based on the initial parameter data; and
   updating the first action model using the aggregated initial parameter data.

9. The method (800) of any of claims 1 to 8, wherein the first device is a client device for performing federated learning, and the second device is a server device for performing the federated learning; and/or
   wherein the plurality of actions comprises at least any one of: a data push action, a user selection action, a crowd-sourcing task allocation action, and a network parameter setting action.

10. A method (900) for action execution, comprising:

   receiving (910) a plurality of parameter data from a plurality of first devices respectively at a second device associated with the plurality of first devices, parameter data from a first device among the plurality of first devices of the plurality of parameter data being transmitted from the first device to the second device in response to that a data accumulated indicator associated with the first device meets a predetermined condition, the data accumulated indicator indicating an amount of data to be transmitted from the first device to the second device, the parameter data comprising reward data and consumption data associated with a set of actions executed at the first device respectively;
   determining (920) aggregated parameter data based on the plurality of parameter data; and
   transmitting (930) the aggregated parameter data to the plurality of first devices respectively, so as to cause the plurality of first devices to update a plurality of first action models located at the plurality of first devices based on the aggregated parameter data respectively.

11. The method (900) of claim 10, wherein the plurality of parameter data comprises:

   reward data of the first device, the reward data representing revenue yielded by the set of actions executed at the first device;
   consumption data of the first device, the consumption data representing consumption of resources allocated to the first device, generated by the set of actions executed at the first device; and
   frequency data of the first device, the frequency data representing the number of executions of an action in the set of actions.

12. The method (900) of claim 11, wherein determining the aggregated parameter data comprises:

   determining aggregated accumulated data in the aggregated parameter data based on the frequency data and the reward data;
   determining aggregated reward data in the aggregated parameter data based on the frequency data and the reward data; and
   determining aggregated consumption data in the aggregated parameter data based on the frequency data and the consumption data.

13. The method (900) of any of claims 10 to 12, further comprising:

   updating a second action model at the second device based on the plurality of parameter data; and

determining an action to be executed using the updated second action model.

14. An electronic device (1200), comprising:

at least one processing unit (1210); and
at least one memory (1220), coupled to the at least one processing unit and storing instructions to be executed by the at least one processing unit, the instructions, when executed by the at least one processing unit, causing the electronic device to implement the method (800) according to any of claims 1 to 9 or the method (900) according to any of claims 10 to 13.

15. A computer-readable storage medium, storing a computer program thereon, the computer program, when executed by a processor, causing the processor to implement the method (800) according to any of claims 1 to 9 or the method (900) according to any of claims 10 to 13.

100

120

122

CLIENT

REWARD

126

124

LP
SOLUTION

CONSUMP
TION

130
PARAMETER

132
PARAMETER

110

112

REWARD

SERVER

...

140

142

CLIENT

REWARD

146

144

LP
SOLUTION

CONSUMP
TION

150
PARAMETER

152
PARAMETER

**FIG. 1**

200

210 FIRST
DEVICE

220 SECOND
DEVICE

212

...

ACTIONS

212

FIRST ACTION
MODEL

214

A SET OF ACTIONS

218

PARAMETER
DATA

216

DATA
ACCUMULATED
INDICATOR

222

SECOND ACTION
MODEL

224

AGGREGATED
PARAMETER DATA

...

**FIG. 2**

FIG. 3

400

---

**Algorithm 1:** FedUCBwK: Client $m$

---

**Input:** $T, M, D, \epsilon$

**Initialization:** epoch $e \leftarrow 0, t \leftarrow 0$

Receive B/M;

Pull each arm $a \in [K]$ and receive reward $r_{m,a}$ and the consumption $c_{m,a}$;

$V_{t_0,m} \leftarrow \lambda I + \sum_{a \in [K]} x(a_{t,m}) x(a_{t,m})^\top$

$\hat{\theta}_{m,a} \leftarrow \frac{r_{m,a} x(a_{t,m})}{\|x(a_{t,m})\|^2}, \hat{\beta}_{m,a} \leftarrow \frac{c_{m,a} x(a_{t,m})}{\|x(a_{t,m})\|^2};$

Send $\hat{\theta}_{m,a}, \hat{\beta}_{m,a}$ for each $a$ to the central server;

Receive $\hat{\theta}^0, \hat{\beta}^0$, and $V^0$ from central server.

Solve $\begin{array}{ll} \max_{p^0 \in \Delta} & X^\top \tilde{\theta}^0 \cdot p^0 \\ \text{s.t.} & X^\top \tilde{\beta}^0 \cdot p^0 \leq (1-\epsilon)\frac{B}{TM} \end{array}$

**while** *not reaching the time horizon $T$* **do**

    Exit if any resource consumption is more than $B/M$.

    Sample and play arm $a_{t,m}$ according to probability $p^e$;

    Update $f(m, a_{t,m}) \leftarrow f(m, a_{t,m}) + 1$

    Get the reward $r_{t,m}$ and the consumption $c_{t,m}$;

    Update $V_{t,m} \leftarrow V_{t,m} + x(a_{t,m}) x(a_{t,m})^\top$

    Update $R_{m,a} \leftarrow R_{m,a} + r_{t,m}$;

    Update $C_{m,a} \leftarrow C_{m,a} + c_{t,m}$;

    **if** $(\det V_{t,m}/\det V_{t_0,m}) > D$ **then**

        Send a synchronization signal to the server to start a communication round.

    **if** *A communication round is started* **then**

        $V_{t_0,m} \leftarrow V_{t,m}, e \leftarrow e + 1$

        $\hat{\theta}^e_{m,a} \leftarrow \left(\frac{R_{m,a}}{f(m,a)}\right) \frac{x(a_{t,m})}{\|x(a_{t,m})\|^2}$

        $\hat{\beta}^e_{m,a} \leftarrow \left(\frac{C_{m,a}}{f(m,a)}\right) \frac{x(a_{t,m})}{\|x(a_{t,m})\|^2}$

        Send $\hat{\theta}^e_{m,a}, \hat{\beta}^e_{m,a}, f(m,a)$ for each $a$ to the central server;

        Receive $\hat{\theta}^e, \hat{\beta}^e, V^e$ from central server.

        Solving $\begin{array}{ll} \max_{p^e \in \Delta} & X^\top \tilde{\theta}^e \cdot p^e \\ \text{s.t.} & X^\top \tilde{\beta}^e \cdot p^e \leq (1-\epsilon)\frac{B}{TM} \end{array}$

        $t \leftarrow t + 1$

---

# FIG. 4

500

---

**Algorithm 2:** FedUCBwK: Central Server

---

**Input:** $T, M, B$

1. **Initialization:** Send $B/M$ to each client;

2. $e \leftarrow 0$

3. Receive $\hat{\theta}_{m,a}, \hat{\beta}_{m,a}$ from each client $m$;

4. $V^0 \leftarrow \left( \sum_{m \in [M]} \sum_{a \in [K]} \dfrac{\hat{\theta}_{m,a}^0 \left( \hat{\theta}_{m,a}^0 \right)^{\top}}{\left\| \hat{\theta}_{m,a}^0 \right\|^2} \right)$

5. $\hat{\theta}^0 = (V^0)^{-1} \left( \sum_{m \in [M]} \sum_{a \in [K]} \hat{\theta}_{m,a}^0 \right)$;

6. $\hat{\beta}^0 = (V^0)^{-1} \left( \sum_{m \in [M]} \sum_{a \in [K]} \hat{\beta}_{m,a}^0 \right)$;

7. Send $\hat{\theta}^0, \hat{\beta}^0$, and $V^0$ to each client;

8. **while** *not reaching the time horizon $T$* **do**

9.     **if** *A communication round is started* **then**

10.         $e \leftarrow e + 1$,Receive $\hat{\theta}_{m,a}^e, \hat{\beta}_{m,a}^e, f(m,a)$ from each client $m$

11.         $V^e \leftarrow \left( \sum_{m \in [M]} \sum_{a \in [K]} f(m,a) \dfrac{\hat{\theta}_{m,a}^e \left( \hat{\theta}_{m,a}^e \right)^{\top}}{\left\| \hat{\theta}_{m,a}^e \right\|^2} \right)$

12.         $\hat{\theta}^e \leftarrow (V^e)^{-1} \left( \sum_{m \in [M]} \sum_{a \in [K]} f(m,a) \hat{\theta}_{m,a}^e \right)$;

13.         $\hat{\beta}^e \leftarrow (V^e)^{-1} \left( \sum_{m \in [M]} \sum_{a \in [K]} f(m,a) \hat{\beta}_{m,a}^e \right)$;

14.         Send $\hat{\theta}^e, \hat{\beta}^e$, and $V^e$ to each client;

---

# FIG. 5

FIG. 6

FIG. 7

800

810

determine a set of actions to be executed at a first device from a plurality of actions based on a first action model at the first device

820

obtain a data accumulated indicator associated with the set of actions, the data accumulated indicator indicating an amount of data to be sent from the first device to a second device associated with the first device

830

the data accumulated indicator meets a predetermined condition?

yes

840

transmit parameter data associated with the set of actions to the second device to cause the second device to update a second action model at the second device using the parameter data, the parameter data comprising reward data and consumption data associated with the set of actions respectively

## FIG. 8

900

910

receive a plurality of parameter data from a plurality of first devices respectively at a second device associated with the plurality of first devices, parameter data from a first device among the plurality of first devices of the plurality of parameter data being transmitted from the first device to the second device in response to that a data accumulated indicator associated with the first device meets a predetermined condition, the data accumulated indicator indicating an amount of data to be transmitted from the first device to the second device, the parameter data comprising reward data and consumption data associated with a set of actions executed at the first device respectively

920

determine aggregated parameter data based on the plurality of parameter data

930

transmit the aggregated parameter data to the plurality of first devices respectively, so as to cause the plurality of first devices to update a plurality of first action models located at the plurality of first devices based on the aggregated parameter data respectively

## FIG. 9

DETERMINING MODULE —1010

OBTAINING MODULE —1020

TRANSMITTING MODULE —1030

1000

**FIG. 10**

RECEIVING MODULE —1110

DETERMINING MODULE —1120

TRANSMITTING MODULE —1130

1100

**FIG. 11**

1200

PROCESSING UNIT —1210

STORAGE DEVICE —1230

COMMUNICATION UNIT —1240

INPUT DEVICE —1250

OUTPUT DEVICE —1260

MEMORY

1225

PROGRAM PRODUCT

—1220

**FIG. 12**

Europäisches
Patentamt

European
Patent Office

Office européen
des brevets

# EUROPEAN SEARCH REPORT

Application Number

EP 24 16 7978

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2022/366320 A1 (LIU JI [CN] ET AL) 17 November 2022 (2022-11-17) * the whole document * | 1-15 | INV. G06F9/50 G06N3/098 |
| X | US 2022/391779 A1 (UPADHYAY SUDHIR [US] ET AL) 8 December 2022 (2022-12-08) * the whole document * | 1-15 | |
| X | US 11 188 797 B2 (IBM [US]) 30 November 2021 (2021-11-30) * the whole document * | 1-15 | |

**TECHNICAL FIELDS SEARCHED (IPC)**

G06F
G06N

The present search report has been drawn up for all claims

| Place of search | Date of completion of the search | Examiner |
|---|---|---|
| The Hague | 29 August 2024 | Renault, Sophie |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

........................................................................
& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 16 7978

This annex lists the patent family members relating to the patent documents cited in the above-mentioned European search report.
The members are as contained in the European Patent Office EDP file on
The European Patent Office is in no way liable for these particulars which are merely given for the purpose of information.

29-08-2024

| Patent document cited in search report | | Publication date | Patent family member(s) | | Publication date |
|---|---|---|---|---|---|
| US 2022366320 | A1 | 17-11-2022 | CN 113516250 | A | 19-10-2021 |
| | | | GB 2610297 | A | 01-03-2023 |
| | | | JP 7389177 | B2 | 29-11-2023 |
| | | | JP 2022137182 | A | 21-09-2022 |
| | | | US 2022366320 | A1 | 17-11-2022 |
| US 2022391779 | A1 | 08-12-2022 | NONE | | |
| US 11188797 | B2 | 30-11-2021 | NONE | | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310340865